# EUROPEAN PATENT SPECIFICATION

(11) **EP 4 041 841 B1**
(45) Date of publication and mention of the grant of the patent: **25.02.2026**
(21) Application number: 20801426.6
(22) Date of filing: 08.10.2020
(51) Int. Cl.: C09K 3/30, C09K 5/04

(54) **AZEOTROPE AND AZEOTROPE-LIKE COMPOSITIONS COMPRISING NEOPENTANE AND ISOMERS OF HFO-1336MZZ**
AZEOTROPE UND AZEOTROPÄHNLICHE ZUSAMMENSETZUNGEN MIT NEOPENTAN UND ISOMEREN VON HFO-1336MZZ
COMPOSITIONS AZÉOTROPES ET DE TYPE AZÉOTROPE COMPRENANT DU NÉOPENTANE ET DES ISOMÈRES DE HFO-1336 MZZ

(30) Priority: 10.10.2019 US 201962913319 P
(43) Date of publication of application: 17.08.2022
(73) Proprietor: The Chemours Company FC, LLC, Wilmington, Delaware 19801 (US)
(72) Inventor: MUSYIMI, Harrison K., Bear, Delaware 19701 (US); ROBIN, Mark L., Middletown, Delaware 19709 (US); JUHASZ, Jason R., Hockessin, Delaware 19707 (US)
(74) Representative: Abitz & Partner
(86) International application number: PCT/US2020/054689
(87) International publication number: WO 2021/072015

(56) References cited:
- WO-A2-2009/085857
- US-A1- 2011 144 216
- US-A1- 2011 220 832
- US-A1- 2011 240 903
- US-A1- 2012 056 124
- US-A1- 2018 264 303

## Description

### TECHNICAL FIELD

The present application relates to azeotrope and azeotrope-like compositions comprising neopentane and a compound selected from E-1, 1, 1,4,4,4-hexafluoro-2-butene (HFO-1336mzz(E)) and Z-1,1,1,4,4,4-hexafluoro-2-butene (HFO-1336mzz(Z)). The compositions described herein may be useful in a variety of applications including, but not limited to, heat transfer applications, and refrigeration applications.

### BACKGROUND

Many industries have been working for the past few decades to find replacements for the ozone depleting chlorofluorocarbons (CFCs) and hydrochlorofluorocarbons (HCFCs). The CFCs and HCFCs have been employed in a wide range of applications, including their use, for example, as aerosol propellants, refrigerants and heat transfer media. In the search for replacements for these versatile compounds, many industries have turned to the use of hydrofluoroolefins (HFOs).

US 2018/264303 A1 concerns mixtures comprising the compound trans-1,1,1,4,4,4-hexafluoro-2-butene and at least one additional compound selected from the group consisting of HFOs, HFCs, HFEs, CFCs, CO₂, olefins, organic acids, alcohols, hydrocarbons, ethers, aldehydes, ketones, and others.

US 2011/0144216 A1 relates to compositions, methods and systems having utility in numerous applications, and in particular, uses for compositions containing the compound cis-1,1,1,4,4,4-hexafluoro-2-butene (Z-HFO-1336mzzm).

### SUMMARY

The present application provides, *inter alia,* compositions comprising:
i) neopentane (*i.e.,* 2,2-dimethylpropane); and
ii) a compound selected from E-1,1,1,4,4,4-hexafluoro-2-butene (*i.e*., HFO-1336mzz(E)) and Z-1,1,1,4,4,4-hexafluoro-2-butene (*i.e.,* HFO-1336mzz(Z)),
wherein the E-1,1,1,4,4,4-hexafluoro-2-butene or Z-1,1,1,4,4,4-hexafluoro-2-butene is present in the composition in an amount effective to form an azeotrope composition or an azeotrope-like composition with the neopentane.

The present application further provides methods of using the compositions provided herein as propellants and heat transfer agents (*e.g.,* in refrigeration or heat transfer applications).

Unless otherwise defined, all technical and scientific terms used herein have the same meaning as commonly understood by one of ordinary skill in the art to which this invention belongs. Methods and materials are described herein for use in the present invention; other, suitable methods and materials known in the art can also be used. The materials, methods, and examples are illustrative only and not intended to be limiting.

### DESCRIPTION OF DRAWINGS

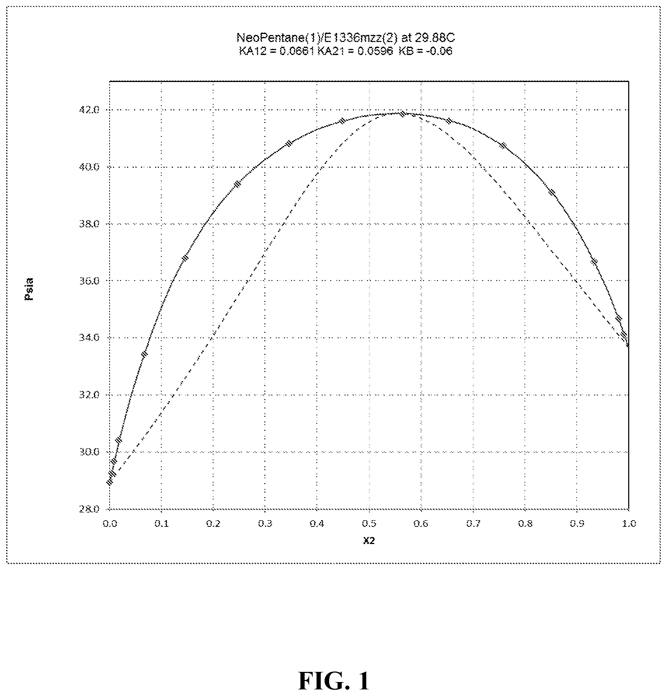

FIG. 1 displays the vapor/liquid equilibrium curve for a mixture of E-HFO-1336mzz and neopentane at a temperature of 29.88°C, and shows the formation of an azeotrope of composition 0.552 mole fraction E-HFO-1336mzz and 0.448 mole fraction neopentane, which has a vapor pressure of 41.8 psia (2.882 bar).

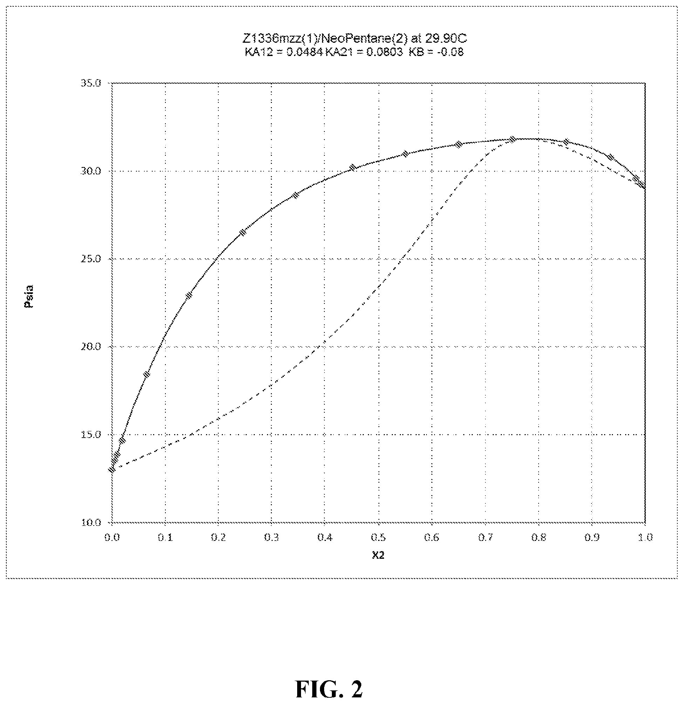

FIG. 2 displays the vapor/liquid equilibrium curve for a mixture of Z-HFO-1336mzz and neopentane at a temperature of 29.90°C, and shows the formation of an azeotrope of composition 0.220 mole fraction Z-HFO-1336mzz and 0.780 mole fraction neopentane, which has a vapor pressure of 31.8 psia (2.183 bar).

### DETAILED DESCRIPTION

The present application provides compositions comprising:
i) neopentane (*i.e.,* 2,2-dimethylpropane); and
ii) a compound selected from E-1,1,1,4,4,4-hexafluoro-2-butene (*i.e*., HFO-1336mzz(E)) and Z-1,1,1,4,4,4-hexafluoro-2-butene (*i.e.,* HFO-1336mzz(Z)),
wherein the E-1,1,1,4,4,4-hexafluoro-2-butene or Z-1,1,1,4,4,4-hexafluoro-2-butene is present in the composition in an amount effective to form an azeotrope composition or an azeotrope-like composition with the neopentane.

### Definitions and Abbreviations

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

As used herein, the term "consisting essentially of" is used to define a composition, method that includes materials, steps, features, components, or elements, in addition to those literally disclosed provided that these additional included materials, steps, features, components, or elements do not materially affect the basic and novel characteristic(s) of the claimed invention, especially the mode of action to achieve the desired result of any of the processes of the present invention. The term "consists essentially of" or "consisting essentially of" occupies a middle ground between "comprising" and "consisting of".

For example, in some embodiments the composition provided herein consists essentially of:
i) neopentane;
ii) a compound selected from E-1,1,1,4,4,4-hexafluoro-2-butene (HFO-1336mzz(E)) and Z-1,1,1,4,4,4-hexafluoro-2-butene (HFO-1336mzz(Z)),
   wherein the E-1,1,1,4,4,4-hexafluoro-2-butene or Z-1,1,1,4,4,4-hexafluoro-2-butene is present in the composition in an amount effective to form an azeotrope composition or an azeotrope-like composition with the neopentane; and
iii) one or more additional components as described herein (wherein the one or more additional components do not materially affect the basic and novel characteristic(s) of the composition).

Also, use of "a" or "an" are employed to describe elements and components described herein. This is done merely for convenience and to give a general sense of the scope of the invention. This description should be read to include one or at least one and the singular also includes the plural unless it is obvious that it is meant otherwise.

As used herein, the term "about" is meant to account for variations due to experimental error (*e.g.,* plus or minus approximately 10% of the indicated value). All measurements reported herein are understood to be modified by the term "about", whether or not the term is explicitly used, unless explicitly stated otherwise.

As used herein, the term "azeotropic composition" refers to a composition where at a given temperature at equilibrium, the boiling point pressure (of the liquid phase) is identical to the dew point pressure (of the vapor phase), *i.e.,* X₂ = Y₂. One way to characterize an azeotropic composition is that the vapor produced by partial evaporation or distillation of the liquid has the same composition as the liquid from which it was evaporated or distilled, that is, the admixture distills/refluxes without compositional change. Constant boiling compositions are characterized as azeotropic because they exhibit either a maximum or minimum boiling point, as compared with that of the non-azeotropic mixtures of the same components. Azeotropic compositions are also characterized by a minimum or a maximum in the vapor pressure of the mixture relative to the vapor pressure of the neat components at a constant temperature.

As used herein, the terms "azeotrope-like composition" and "near-azeotropic composition" refer to a composition wherein the difference between the bubble point pressure ("BP") and dew point pressure ("DP") of the composition at a particular temperature is less than or equal to 5 percent based upon the bubble point pressure, *i.e.,* [(BP-DP )/BP] x 100 ≤ 5. As used herein, the terms "3 percent azeotrope-like composition" and "3 percent near-azeotropic composition" shall be understood to mean a composition wherein the difference between the bubble point pressure ("BP") and dew point pressure ("DP") of the composition at a particular temperature is less than or equal to 3 percent based upon the bubble point pressure, i.e., [(BP- DP)/BP] x 100 ≤ 3.

Binary azeotropic or azeotrope-like compositions of substantially constant-boiling mixtures can be characterized, depending upon the conditions chosen, in a number of ways. For example, it is well known by those skilled in the art, that, at different pressures the composition of a given azeotrope or azeotrope-like composition will vary at least to some degree, as will the boiling point temperature. Thus, an azeotropic or azeotrope-like composition of two compounds represents a unique type of relationship but with a variable composition that depends on temperature and/or pressure. Therefore, compositional ranges, rather than fixed compositions, are often used to define azeotropes and azeotrope-like compositions.

For purposes of this invention, "effective amount" refers to the amount of each component of a composition provided herein which, when combined, results in the formation of an azeotropic or azeotrope-like composition. This definition includes the amounts of each component, which amounts may vary depending on the pressure applied to the composition so long as the azeotropic or azeotrope-like compositions continue to exist at the different pressures, but with possible different boiling points. Therefore, effective amount includes the amounts, such as may be expressed in weight percentages, of each component of the compositions of the instant invention which form azeotropic or azeotrope-like compositions at temperatures or pressures other than as described herein.

As used herein, the term "mole fraction" refers to the ratio of the number of moles of one component in the binary composition to the sum of the numbers of moles of each of the two components in said composition (e.g., X₂ = m₂/(m₁ + m₂).

To determine the relative volatility of any two compounds, a method known as the PTx method can be used. In this procedure, the total absolute pressure in a cell of known volume is measured at a constant temperature for various compositions of the two compounds. Use of the PTx Method is described in detail in "Phase Equilibrium in Process Design", Wiley-Interscience Publisher, 1970, written by Harold R. Null, on pages 124 to 126. The resulting pressure v. liquid composition data are alternately referred to as Vapor Liquid Equilibria data (or "VLE data.")

These measurements can be converted into equilibrium vapor and liquid compositions in the PTx cell by using an activity coefficient equation model, such as the Non-Random, Two-Liquid (NRTL) equation, to represent liquid phase nonidealities. Use of an activity coefficient equation, such as the NRTL equation is described in detail in "The Properties of Gases and Liquids," 4th edition, published by McGraw Hill, written by Reid, Prausnitz and Poling, on pages 241 to 387, and in "Phase Equilibria in Chemical Engineering," published by Butterworth Publishers, 1985, written by Stanley M. Walas, pages 165 to 244. The collection of VLE data, the determination of interaction parameters by regression and the use of an equation of state to predict non-ideal behavior of a system are taught in "Double Azeotropy in Binary Mixtures of NH3 and CHF2CF2," C.-P. Chai Kao, M.E. Paulaitis, A. Yokozeki, Fluid Phase Equilibria, 127 (1997) 191-203. Without wishing to be bound by any theory or explanation, it is believed that the NRTL equation, together with the PTx cell data, can sufficiently predict the relative volatilities of the compositions provided herein and can therefore predict the behavior of these mixtures in multi-stage separation equipment such as distillation columns.

When an amount, concentration, or other value or parameter is given as either a range, preferred range or a list of upper preferable values and/or lower preferable values, this is to be understood as specifically disclosing all ranges formed from any pair of any upper range limit or preferred value and any lower range limit or preferred value, regardless of whether ranges are separately disclosed. Where a range of numerical values is recited herein, unless otherwise stated, the range is intended to include the endpoints thereof, and all integers and fractions within the range.

### Compositions

A composition, comprising:
i) neopentane; and
ii) a compound selected from E-1,1,1,4,4,4-hexafluoro-2-butene and Z-1,1,1,4,4,4-hexafluoro-2-butene.

In some embodiments, the composition provided herein is an azeotrope or azeotrope-like composition. In some embodiments, the composition provided herein is an azeotrope composition. In some embodiments, the composition provided herein is an azeotrope-like composition. In some embodiments, the E-1,1,1,4,4,4-hexafluoro-2-butene or Z-1,1,1,4,4,4-hexafluoro-2-butene is present in the composition in an amount effective to form an azeotrope composition or an azeotrope-like composition with the neopentane.

In some embodiments, the composition provided herein comprises neopentane and E-1,1,1,4,4,4-hexafluoro-2-butene, wherein the E-1,1,1,4,4,4-hexafluoro-2-butene is present in the composition in an amount effective to form an azeotrope composition or an azeotrope-like composition with the neopentane. In some embodiments, the composition comprising neopentane and E-1,1,1,4,4,4-hexafluoro-2-butene is an azeotrope composition (*i.e.,* an azeotropic composition). In some embodiments, the composition comprising neopentane and E-1,1,1,4,4,4-hexafluoro-2-butene is an azeotrope-like composition.

In some embodiments, the composition comprising neopentane and E-1,1,1,4,4,4-hexafluoro-2-butene comprises from 40 to 60 mol% neopentane, for example, 40 to 55, 40 to 50, 40 to 45, 45 to 60, 45 to 55, 45 to 50, 50 to 60, 50 to 55, or 55 to 60 mol% neopentane. In some embodiments, the composition comprising neopentane and E-1,1,1,4,4,4-hexafluoro-2-butene comprises from 40 to 50 mol% neopentane.

In some embodiments, the composition comprising neopentane and E-1, 1, 1,4,4,4-hexafluoro-2-butene comprises from 60 to 40 mol% E-1,1,1,4,4,4-hexafluoro-2-butene, for example, 60 to 45, 60 to 50, 60 to 55, 55 to 40, 55 to 45, 55 to 50, 50 to 40, 50 to 45, or 45 to 40 mol% E-1,1,1,4,4,4-hexafluoro-2-butene. In some embodiments, the composition comprising neopentane and E-1,1,1,4,4,4-hexafluoro-2-butene comprises from 60 to 50 mol% E-1,1,1,4,4,4-hexafluoro-2-butene.

In some embodiments, the composition comprises from 40 to 60 mol% neopentane and 60 to 40 mol% E-1,1,1,4,4,4-hexafluoro-2-butene. In some embodiments, the composition comprises from 40 to 60 mol% neopentane and 60 to 40 mol% E-1,1,1,4,4,4-hexafluoro-2-butene, and has a boiling point of from - 40°C to 120°C at a pressure of from 2 psi to 390 psi (0.138 bar to 26.890 bar).

In some embodiments, the composition comprises from 40 to 50 mol% neopentane and 60 to 50 mol% E-1,1,1,4,4,4-hexafluoro-2-butene. In some embodiments, the composition comprises from 40 to 50 mol% neopentane and 60 to 50 mol% E-1,1,1,4,4,4-hexafluoro-2-butene, and has a boiling point of from 0.9°C to 128°C at a pressure of from 1 atm to 30 atm (1.013 bar to 30.398 bar).

In some embodiments, the composition comprising neopentane and E-1,1,1,4,4,4-hexafluoro-2-butene comprises 98.0 to 99.9 mol% neopentane, for example, 98.0 to 99.8, 98.0 to 99.5, 98.0 to 99.3, 98.0 to 99.0, 98.0 to 98.8, 98.0 to 98.5, 98.5 to 99.9, 98.5 to 99.8, 98.5 to 99.5, 98.5 to 99.3, 98.5 to 99.0, 98.5 to 98.8, 98.8 to 99.9, 98.8 to 99.8, 98.8 to 99.5, 98.8 to 99.3, 98.8 to 99.0, 99.0 to 99.9, 99.0 to 99.8, 99.0 to 99.5, 99.0 to 99.3, 99.3 to 99.9, 99.3 to 99.8, 99.3 to 99.5, 99.5 to 99.9, 99.5 to 99.8, or 99.8 to 99.9 mol% neopentane. In some embodiments, the composition comprising neopentane and E-1,1,1,4,4,4-hexafluoro-2-butene comprises from 98.2 to 99.8 mol% neopentane.

In some embodiments, the composition comprising neopentane and E-1,1,1,4,4,4-hexafluoro-2-butene comprises 2.0 to 0.1 mol% E-1,1,1,4,4,4-hexafluoro-2-butene, for example, 2.0 to 0.2, 2.0 to 0.5, 2.0 to 0.7, 2.0 to 1.0, 2.0 to 1.2, 2.0 to 1.5, 1.5 to 0.1, 1.5 to 0.2, 1.5 to 0.5, 1.5 to 0.7, 1.5 to 1.0, 1.5 to 1.2, 1.2 to 0.1, 1.2 to 0.2, 1.2 to 0.5, 1.2 to 0.7, 1.2 to 1.0, 1.0 to 0.1, 1.0 to 0.2, 1.0 to 0.5, 1.0 to 0.7, 0.7 to 0.1, 0.7 to 0.2, 0.7 to 0.5, 0.5 to 0.1, 0.5 to 0.2, or 0.2 to 0.1 mol% E-1,1,1,4,4,4-hexafluoro-2-butene.

In some embodiments, the composition comprising neopentane and E-1,1,1,4,4,4-hexafluoro-2-butene comprises 1.6 to 0.2 mol% E-1,1,1,4,4,4-hexafluoro-2-butene.

In some embodiments, the composition comprising neopentane and E-1,1,1,4,4,4-hexafluoro-2-butene comprises from 98.4 to 99.8 mol% neopentane and 1.6 to 0.2 mol% E-1,1,1,4,4,4-hexafluoro-2-butene. In some embodiments, the composition comprising neopentane and E-1,1,1,4,4,4-hexafluoro-2-butene comprises from 98.4 to 99.8 mol% neopentane and 1.6 to 0.2 mol% E-1,1,1,4,4,4-hexafluoro-2-butene, and has a boiling point of from 8.3oC to 9.3°C at a pressure of 1 atm (1.013 bar).

In some embodiments, the composition comprising neopentane and E-1,1,1,4,4,4-hexafluoro-2-butene comprises from 35 to 65 mol% neopentane, for example, 35 to 60, 35 to 55, 35 to 50, 35 to 45, 35 to 40, 40 to 65, 40 to 60, 40 to 55, 40 to 50, 40 to 45, 45 to 65, 45 to 60, 45 to 55, 45 to 50, 50 to 65, 50 to 60, 50 to 55, 55 to 65, 55 to 60, or 60 to 65 mol% neopentane. In some embodiments, the composition comprising neopentane and E-1,1,1,4,4,4-hexafluoro-2-butene comprises from 38.4 to 62.6 mol% neopentane.

In some embodiments, the composition comprising neopentane and E-1,1,1,4,4,4-hexafluoro-2-butene comprises from 70 to 35 mol% E-1,1,1,4,4,4-hexafluoro-2-butene, for example, 70 to 40, 70 to 45, 70 to 50, 70 to 55, 70 to 60, 70 to 65, 65 to 35, 65 to 40, 65 to 45, 65 to 50, 65 to 55, 65 to 60, 60 to 35, 60 to 40, 60 to 45, 60 to 50, 60 to 55, 55 to 35, 55 to 40, 55 to 45, 55 to 50, 50 to 35, 50 to 40, 50 to 45, 45 to 35, 45 to 40, or 40 to 35 mol% E-1,1,1,4,4,4-hexafluoro-2-butene. In some embodiments, the composition comprising neopentane and E-1, 1, 1,4,4,4-hexafluoro-2-butene comprises from 65.2 to 37.4 mol% E-1,1,1,4,4,4-hexafluoro-2-butene.

In some embodiments, the composition comprising neopentane and E-1,1,1,4,4,4-hexafluoro-2-butene comprises from 38.4 to 62.6 mol% neopentane and 65.2 to 37.4 mol% E-1,1,1,4,4,4-hexafluoro-2-butene. In some embodiments, the composition comprising neopentane and E-1,1,1,4,4,4-hexafluoro-2-butene comprises from 38.4 to 62.6 mol% neopentane and 65.2 to 37.4 mol% E-1,1,1,4,4,4-hexafluoro-2-butene, and has a boiling point of from 0.9°C to 1.2°C at a pressure of 1 atm (1.013 bar).

In some embodiments, the composition comprising neopentane and E-1, 1, 1,4,4,4-hexafluoro-2-butene comprises 0.1 to 3.0 mol% neopentane, for example, 0.1 to 2.8, 0.1 to 2.5, 0.1 to 2.0, 0.1 to 1.5, 0.1 to 1.0, 0.1 to 0.5, 0.5 to 3.0, 0.5 to 2.8, 0.5 to 2.5, 0.5 to 2.0, 0.5 to 1.5, 0.5 to 1.0, 1.0 to 3.0, 1.0 to 2.8, 1.0 to 2.5, 1.0 to 2.0, 1.0 to 1.5, 1.5 to 3.0, 1.5 to 2.8, 1.5 to 2.5, 1.5 to 2.0, 2.0 to 3.0, 2.0 to 2.8, 2.0 to 2.5, 2.5 to 3.0, 2.5 to 2.8, or 2.8 to 3.0 mol% neopentane. In some embodiments, the composition comprising neopentane and E-1,1,1,4,4,4-hexafluoro-2-butene comprises from 0.2 to 2.8 mol% neopentane.

In some embodiments, the composition comprising neopentane and E-1,1,1,4,4,4-hexafluoro-2-butene comprises 99.9 to 97.0 mol% E-1,1,1,4,4,4-hexafluoro-2-butene, for example, 99.9 to 97.2, 99.9 to 97.5, 99.9 to 98.0, 99.9 to 98.5, 99.9 to 99.0, 99.9 to 99.8, 99.8 to 97.0, 99.8 to 97.2, 99.8 to 97.5, 99.8 to 98.0, 99.8 to 98.5, 99.8 to 99.0, 99.0 to 97.0, 99.0 to 97.2, 99.0 to 97.5, 99.0 to 98.0, 99.0 to 98.5, 98.5 to 97.0, 98.5 to 97.2, 98.5 to 97.5, 98.5 to 98.0, 98.0 to 97.0, 98.0 to 97.2, 98.0 to 97.5, 97.5 to 97.0, 97.5 to 97.2, or 97.2 to 97.0 mol% E-1,1,1,4,4,4-hexafluoro-2-butene. In some embodiments, the composition comprising neopentane and E-1,1,1,4,4,4-hexafluoro-2-butene comprises 99.8 to 97.2 mol% E-1,1,1,4,4,4-hexafluoro-2-butene.

In some embodiments, the composition comprising neopentane and E-1,1,1,4,4,4-hexafluoro-2-butene comprises from 0.2 to 2.8 mol% neopentane and 99.8 to 97.2 mol% E-1,1,1,4,4,4-hexafluoro-2-butene. In some embodiments, the composition comprising neopentane and E-1,1,1,4,4,4-hexafluoro-2-butene comprises comprises from 0.2 to 2.8 mol% neopentane and 99.8 to 97.2 mol% E-1,1,1,4,4,4-hexafluoro-2-butene, and has a boiling point of from 6.3°C to 7.4°C at a pressure of 1 atm (1.013 bar).

In some embodiments, the composition comprising neopentane and E-1,1,1,4,4,4-hexafluoro-2-butene comprises:
from 99.8 to 98.2 mol% neopentane and 0.2 to 1.8 mol% E-1,1,1,4,4,4-hexafluoro-2-butene; or
from 71.6 to 47.6 mol% neopentane and 28.4 to 52.4 mol% E-1,1,1,4,4,4-hexafluoro-2-butene; or
from 1.2 to 0.2 mol% neopentane and 98.8 to 99.8 mol% E-1,1,1,4,4,4-hexafluoro-2-butene; or
from 99.8 to 98.4 mol% neopentane and 0.2 to 1.6 mol% E-1,1,1,4,4,4-hexafluoro-2-butene; or
from 66.6 to 40.8 mol% neopentane and 33.4 to 59.2 mol% E-1,1,1,4,4,4-hexafluoro-2-butene; or
from 1.8 to 0.2 mol% neopentane and 98.2 to 99.8 mol% E-1,1,1,4,4,4-hexafluoro-2-butene; or
from 62.8 to 35.2 mol% neopentane and 37.2 to 64.8 mol% E-1,1,1,4,4,4-hexafluoro-2-butene; or
from 2.6 to 0.2 mol% neopentane and 97.4 to 99.8 mol% E-1,1,1,4,4,4-hexafluoro-2-butene; or
from 59.8 to 30.2 mol% neopentane and 40.2 to 69.8 mol% E-1,1,1,4,4,4-hexafluoro-2-butene; or
from 3.4 to 0.2 mol% neopentane and 96.6 to 99.8 mol% E-1,1,1,4,4,4-hexafluoro-2-butene; or
from 58.4 to 28.2 mol% neopentane and 41.6 to 71.8 mol% E-1,1,1,4,4,4-hexafluoro-2-butene; or
from 3.8 to 0.2 mol% neopentane and 96.2 to 99.8 mol% E-1,1,1,4,4,4-hexafluoro-2-butene; or
from 57.2 to 26.4 mol% neopentane and 42.8 to 73.6 mol% E-1,1,1,4,4,4-hexafluoro-2-butene; or
from 4.4 to 0.2 mol% neopentane and 95.6 to 99.8 mol% E-1,1,1,4,4,4-hexafluoro-2-butene; or
from 55.4 to 23.6 mol% neopentane and 44.6 to 76.4 mol% E-1,1,1,4,4,4-hexafluoro-2-butene; or
from 5.2 to 99.1 mol% neopentane and 94.8 to 0.9 mol% E-1,1,1,4,4,4-hexafluoro-2-butene; or
from 99.8 to 98.6 mol% neopentane and 0.2 to 1.4 mol% E-1,1,1,4,4,4-hexafluoro-2-butene; or
from 53.8 to 23.2 mol% neopentane and 46.2 to 76.8 mol% E-1,1,1,4,4,4-hexafluoro-2-butene; or
from 5.4 to 0.2 mol% neopentane and 94.6 to 99.8 mol% E-1,1,1,4,4,4-hexafluoro-2-butene; or
from 56 to 24.4 mol% neopentane and 44.0 to 75.6 mol% E-1,1,1,4,4,4-hexafluoro-2-butene; or
from 4.6 to 0.2 mol% neopentane and 95.4 to 99.8 mol% E-1,1,1,4,4,4-hexafluoro-2-butene; or
from 57.2 to 3.8 mol% neopentane and 42.8 to 96.2 mol% E-1,1,1,4,4,4-hexafluoro-2-butene; or
from 2.6 to 0.2 mol% neopentane and 97.4 to 99.8 mol% E-1,1,1,4,4,4-hexafluoro-2-butene.

In some embodiments, the composition comprising neopentane and E-1,1,1,4,4,4-hexafluoro-2-butene comprises:
from 99.8 to 98.2 mol% neopentane and 0.2 to 1.8 mol% E-1,1,1,4,4,4-hexafluoro-2-butene; or
from 71.6 to 47.6 mol% neopentane and 28.4 to 52.4 mol% E-1,1,1,4,4,4-hexafluoro-2-butene; or
from 1.2 to 0.2 mol% neopentane and 98.8 to 99.8 mol% E-1,1,1,4,4,4-hexafluoro-2-butene; or
from 99.8 to 98.4 mol% neopentane and 0.2 to 1.6 mol% E-1,1,1,4,4,4-hexafluoro-2-butene; or
from 66.6 to 40.8 mol% neopentane and 33.4 to 59.2 mol% E-1,1,1,4,4,4-hexafluoro-2-butene; or
from 1.8 to 0.2 mol% neopentane and 98.2 to 99.8 mol% E-1,1,1,4,4,4-hexafluoro-2-butene; or
from 62.8 to 35.2 mol% neopentane and 37.2 to 64.8 mol% E-1,1,1,4,4,4-hexafluoro-2-butene; or
from 2.6 to 0.2 mol% neopentane and 97.4 to 99.8 mol% E-1,1,1,4,4,4-hexafluoro-2-butene; or
from 59.8 to 30.2 mol% neopentane and 40.2 to 69.8 mol% E-1,1,1,4,4,4-hexafluoro-2-butene; or
from 3.4 to 0.2 mol% neopentane and 96.6 to 99.8 mol% E-1,1,1,4,4,4-hexafluoro-2-butene; or
from 58.4 to 28.2 mol% neopentane and 41.6 to 71.8 mol% E-1,1,1,4,4,4-hexafluoro-2-butene; or
from 3.8 to 0.2 mol% neopentane and 96.2 to 99.8 mol% E-1,1,1,4,4,4-hexafluoro-2-butene; or
from 57.2 to 26.4 mol% neopentane and 42.8 to 73.6 mol% E-1,1,1,4,4,4-hexafluoro-2-butene; or
from 4.4 to 0.2 mol% neopentane and 95.6 to 99.8 mol% E-1,1,1,4,4,4-hexafluoro-2-butene; or
from 55.4 to 23.6 mol% neopentane and 44.6 to 76.4 mol% E-1,1,1,4,4,4-hexafluoro-2-butene; or
from 5.2 to 99.1 mol% neopentane and 94.8 to 0.9 mol% E-1,1,1,4,4,4-hexafluoro-2-butene; or
from 99.8 to 98.6 mol% neopentane and 0.2 to 1.4 mol% E-1,1,1,4,4,4-hexafluoro-2-butene; or
from 53.8 to 23.2 mol% neopentane and 46.2 to 76.8 mol% E-1,1,1,4,4,4-hexafluoro-2-butene; or
from 5.4 to 0.2 mol% neopentane and 94.6 to 99.8 mol% E-1,1,1,4,4,4-hexafluoro-2-butene; or
from 56 to 24.4 mol% neopentane and 44.0 to 75.6 mol% E-1,1,1,4,4,4-hexafluoro-2-butene; or
from 4.6 to 0.2 mol% neopentane and 95.4 to 99.8 mol% E-1,1,1,4,4,4-hexafluoro-2-butene; or
from 57.2 to 3.8 mol% neopentane and 42.8 to 96.2 mol% E-1,1,1,4,4,4-hexafluoro-2-butene; or
from 2.6 to 0.2 mol% neopentane and 97.4 to 99.8 mol% E-1,1,1,4,4,4-hexafluoro-2-butene;
wherein the composition has a boiling point of from -40°C to 120°C at a pressure of 1 atm (1.013 bar), for example, -40°C to 100°C, -40°C to 80°C, -40°C to 60°C, -40°C to 40°C, -40°C to 20°C, -40°C to 0°C, -40°C to -20°C, -20°C to 120°C, -20°C to 100°C, -20°C to 80°C, -20°C to 60°C, -20°C to 40°C, -20°C to 20°C, -20°C to 0°C, 0°C to 120°C, 0°C to 100°C, 0°C to 80°C, 0°C to 60°C, 0°C to 40°C, 0°C to 20°C, 20°C to 120°C, 20°C to 100°C, 20°C to 80°C, 20°C to 60°C, 20°C to 40°C, 40°C to 120°C, 40°C to 100°C, 40°C to 80°C, 40°C to 60°C, 60°C to 120°C, 60°C to 100°C, 60°C to 80°C, 80°C to 120°C, 80°C to 100°C, or 100°C to 120°C.

In some embodiments, the composition comprising neopentane and E-1,1,1,4,4,4-hexafluoro-2-butene has a boiling point of -40°C at a pressure of 1 atm (1.013 bar).

In some embodiments, the composition comprising neopentane and E-1,1,1,4,4,4-hexafluoro-2-butene has a boiling point of -20°C at a pressure of 1 atm (1.013 bar).

In some embodiments, the composition comprising neopentane and E-1,1,1,4,4,4-hexafluoro-2-butene has a boiling point of 0°C at a pressure of 1 atm (1.013 bar).

In some embodiments, the composition comprising neopentane and E-1, 1, 1,4,4,4-hexafluoro-2-butene has a boiling point of 20°C at a pressure of 1 atm (1.013 bar).

In some embodiments, the composition comprising neopentane and E-1, 1, 1,4,4,4-hexafluoro-2-butene has a boiling point of 30°C at a pressure of 1 atm (1.013 bar).

In some embodiments, the composition comprising neopentane and E-1,1,1,4,4,4-hexafluoro-2-butene has a boiling point of 40°C at a pressure of 1 atm (1.013 bar).

In some embodiments, the composition comprising neopentane and E-1,1,1,4,4,4-hexafluoro-2-butene has a boiling point of 60°C at a pressure of 1 atm (1.013 bar).

In some embodiments, the composition comprising neopentane and E-1, 1, 1,4,4,4-hexafluoro-2-butene has a boiling point of 80°C at a pressure of 1 atm (1.013 bar).

In some embodiments, the composition comprising neopentane and E-1,1,1,4,4,4-hexafluoro-2-butene has a boiling point of 100°C at a pressure of 1 atm (1.013 bar).

In some embodiments, the composition comprising neopentane and E-1, 1, 1,4,4,4-hexafluoro-2-butene has a boiling point of 120°C at a pressure of 1 atm (1.013 bar).

In some embodiments, the composition provided herein comprises neopentane and Z-1,1,1,4,4,4-hexafluoro-2-butene, wherein the Z-1,1,1,4,4,4-hexafluoro-2-butene is present in the composition in an amount effective to form an azeotrope composition or an azeotrope-like composition with the neopentane. In some embodiments, the composition comprising neopentane and Z-1,1,1,4,4,4-hexafluoro-2-butene is an azeotrope composition (*i.e.,* an azeotropic composition). In some embodiments, the composition comprising neopentane and Z-1,1,1,4,4,4-hexafluoro-2-butene is an azeotrope-like composition.

In some embodiments, the composition comprising neopentane and Z-1,1,1,4,4,4-hexafluoro-2-butene comprises from 60 to 95 mol% neopentane, for example, 60 to 90, 60 to 85, 60 to 80, 60 to 75, 60 to 70, 65 to 95, 65 to 90, 65 to 85, 65 to 80, 65 to 75, 70 to 95, 70 to 90, 70 to 85, 70 to 80, 75 to 95, 75 to 90, 75 to 85, 80 to 95, 80 to 90, or 85 to 95 mol% neopentane. In some embodiments, the composition comprising neopentane and Z-1,1,1,4,4,4-hexafluoro-2-butene comprises from 60 to 93 mol% neopentane.

In some embodiments, the composition comprising neopentane and Z-1,1,1,4,4,4-hexafluoro-2-butene comprises from 40 to 5 mol% Z-1,1,1,4,4,4-hexafluoro-2-butene, for example, 40 to 10, 40 to 15, 40 to 20, 40 to 25, 40 to 30, 40 to 35, 35 to 5, 35 to 10, 35 to 15, 35 to 20, 35 to 25, 35 to 30, 30 to 5, 30 to 10, 30 to 15, 30 to 20, 30 to 25, 25 to 5, 25 to 10, 25 to 15, 25 to 20, 20 to 5, 20 to 10, 20 to 15, 15 to 5, 15 to 10, or 10 to 5 mol% Z-1,1,1,4,4,4-hexafluoro-2-butene. In some embodiments, the composition comprising neopentane and Z-1,1,1,4,4,4-hexafluoro-2-butene comprises from 40 to 7 mol% Z-1,1,1,4,4,4-hexafluoro-2-butene.

In some embodiments, the composition comprising neopentane and Z-1,1,1,4,4,4-hexafluoro-2-butene comprises from 60 to 93 mol% neopentane and 40 to 7 mol% Z-1,1,1,4,4,4-hexafluoro-2-butene. In some embodiments, the composition comprising neopentane and Z-1,1,1,4,4,4-hexafluoro-2-butene comprises from 60 to 93 mol% neopentane and 40 to 7 mol% Z-1,1,1,4,4,4-hexafluoro-2-butene, and has a boiling point of from -40°C to 120°C at a pressure of from 1.5 psi to 310 psi (0.103 bar to 21.374 bar).

In some embodiments, the composition comprising neopentane and Z-1,1,1,4,4,4-hexafluoro-2-butene comprises from 50 to 85 mol% neopentane, for example, 50 to 80, 50 to 75, 50 to 70, 50 to 65, 50 to 60, 50 to 55, 55 to 85, 55 to 80, 55 to 75, 55 to 70, 55 to 65, 55 to 60, 60 to 85, 60 to 80, 60 to 75, 60 to 70, 60 to 65, 65 to 85, 65 to 80, 65 to 75, 65 to 70, 70 to 85, 70 to 80, 70 to 75, 75 to 85, 75 to 80, or 80 to 85 mol% neopentane. In some embodiments, the composition comprising neopentane and Z-1,1,1,4,4,4-hexafluoro-2-butene comprises from 56 to 83 mol% neopentane.

In some embodiments, the composition comprising neopentane and Z-1,1,1,4,4,4-hexafluoro-2-butene comprises from 50 to 15 mol% Z-1,1,1,4,4,4-hexafluoro-2-butene, for example, 50 to 20, 50 to 25, 50 to 30, 50 to 35, 50 to 40, 50 to 45, 45 to 15, 45 to 20, 45 to 25, 45 to 30, 45 to 35, 45 to 40, 40 to 15, 40 to 20, 40 to 25, 40 to 30, 40 to 35, 35 to 15, 35 to 20, 35 to 25, 35 to 30, 30 to 15, 30 to 20, 30 to 25, 25 to 15, 25 to 20, or 20 to 15 mol% Z-1,1,1,4,4,4-hexafluoro-2-butene. In some embodiments, the composition comprising neopentane and Z-1,1,1,4,4,4-hexafluoro-2-butene comprises from 44 to 17 mol% Z-1,1,1,4,4,4-hexafluoro-2-butene.

In some embodiments, the composition comprising neopentane and Z-1,1,1,4,4,4-hexafluoro-2-butene comprises from 56 to 83 mol% neopentane and 44 to 17 mol% Z-1,1,1,4,4,4-hexafluoro-2-butene. In some embodiments, the composition comprising neopentane and Z-1,1,1,4,4,4-hexafluoro-2-butene comprises from 56 to 83 mol% neopentane and 44 to 17 mol% Z-1,1,1,4,4,4-hexafluoro-2-butene, and has a boiling point of from 5°C to 145°C at a pressure of from 1 atm to 30 atm (1.013 bar to 30.398 bar).

In some embodiments, the composition comprising neopentane and Z-1,1,1,4,4,4-hexafluoro-2-butene comprises from 99.9 to 75.0 mol% neopentane, for example, 99.9 to 80.0, 99.9 to 85.0, 99.9 to 90.0, 99.9 to 95.0, 99.9 to 99.0, 99.9 to 99.6, 99.6 to 80.0, 99.6 to 85.0, 99.6 to 90.0, 99.6 to 95.0, 99.6 to 99.0, 99.0 to 80.0, 99.0 to 85.0, 99.0 to 90.0, 99.0 to 95, 95.0 to 80.0, 95.0 to 85.0, 95.0 to 90.0, 90.0 to 80.0, 90.0 to 85.0, or 85.0 to 80.0 mol% neopentane. In some embodiments, the composition comprising neopentane and Z-1,1,1,4,4,4-hexafluoro-2-butene comprises from 99.6 to 79.2 mol% neopentane.

In some embodiments, the composition comprising neopentane and Z-1,1,1,4,4,4-hexafluoro-2-butene comprises from 0.1 to 25.0 mol% Z-1,1,1,4,4,4-hexafluoro-2-butene, for example, 0.1 to 20.0, 0.1 to 15.0, 0.1 to 10.0, 0.1 to 5.0, 0.1 to 1.0, 0.1 to 0.4, 0.4 to 25.0, 0.4 to 20.0, 0.4 to 15.0, 0.4 to 10.0, 0.4 to 5.0, 0.4 to 1.0, 1.0 to 25.0, 1.0 to 20.0, 1.0 to 15.0, 1.0 to 10.0, 1.0 to 5.0, 5.0 to 25.0, 5.0 to 20.0, 5.0 to 15.0, 5.0 to 10.0, 10.0 to 25.0, 10.0 to 20.0, 10.0 to 15.0, 15.0 to 25.0, 15.0 to 20.0, or 20.0 to 25.0 mol% Z-1,1,1,4,4,4-hexafluoro-2-butene. In some embodiments, the composition comprising neopentane and Z-1,1,1,4,4,4-hexafluoro-2-butene comprises from 0.4 to 20.8 mol% Z-1,1,1,4,4,4-hexafluoro-2-butene.

In some embodiments, the composition comprising neopentane and Z-1,1,1,4,4,4-hexafluoro-2-butene comprises from 99.6 to 79.2 mol% neopentane and 0.4 to 20.8 mol% Z-1,1,1,4,4,4-hexafluoro-2-butene. In some embodiments, the composition comprising neopentane and Z-1,1,1,4,4,4-hexafluoro-2-butene comprises from 99.6 to 79.2 mol% neopentane and 0.4 to 20.8 mol% Z-1,1,1,4,4,4-hexafluoro-2-butene, and has a boiling point of from 7.8°C to 9.4°C at a pressure of 1 atm (1.013 bar).

In some embodiments, the composition comprising neopentane and Z-1,1,1,4,4,4-hexafluoro-2-butene comprises from 4.0 to 1.0 mol% neopentane, for example, 4.0 to 1.5, 4.0 to 2.0, 4.0 to 2.5, 4.0 to 3.0, 4.0 to 3.5, 3.5 to 1.0, 3.5 to 1.5, 3.5 to 2.0, 3.5 to 2.5, 3.5 to 3.0, 3.0 to 1.0, 3.0 to 1.5, 3.0 to 2.0, 3. 0 to 2.5, 2.5 to 1.0, 2.5 to 1.5, 2.5 to 2.0, 2.0 to 1.0, 2.0 to 1.5, or 1.5 to 1.0 mol% neopentane. In some embodiments, the composition comprising neopentane and Z-1,1,1,4,4,4-hexafluoro-2-butene comprises from 3.2 to 1.6 mol% neopentane.

In some embodiments, the composition comprising neopentane and Z-1,1,1,4,4,4-hexafluoro-2-butene comprises from 96.0 to 99.0 mol% Z-1,1,1,4,4,4-hexafluoro-2-butene, for example, 96.0 to 98.5, 96.0 to 98.0, 96.0 to 97.5, 96.0 to 97.0, 96.0 to 96.5, 96.5 to 99.0, 96.5 to 98.5, 96.5 to 98.0, 96.5 to 97.5, 96.5 to 97.0, 97.0 to 99.0, 97.0 to 98.5, 97.0 to 98.0, 97.0 to 97.5, 97.5 to 99.0, 97.5 to 98.5, 97.5 to 98.0, 98.0 to 99.0, 98.0 to 98.5, or 98.5 to 99.0 mol% Z-1,1,1,4,4,4-hexafluoro-2-butene. In some embodiments, the composition comprising neopentane and Z-1,1,1,4,4,4-hexafluoro-2-butene comprises from 96.8 to 98.4 mol% Z-1,1,1,4,4,4-hexafluoro-2-butene.

In some embodiments, the composition comprising neopentane and Z-1,1,1,4,4,4-hexafluoro-2-butene comprises from 3.2 to 1.6 mol% neopentane and 96.8 to 98.4 mol% Z-1,1,1,4,4,4-hexafluoro-2-butene. In some embodiments, the composition comprising neopentane and Z-1,1,1,4,4,4-hexafluoro-2-butene comprises from 3.2 to 1.6 mol% neopentane and 96.8 to 98.4 mol% Z-1,1,1,4,4,4-hexafluoro-2-butene, and has a boiling point of from 32.6°C to 33.0°C at a pressure of 1 atm (1.013 bar).

In some embodiments, the composition comprising neopentane and Z-1,1,1,4,4,4-hexafluoro-2-butene comprises:
from 99.8 to 85.2 mol% neopentane and 0.2 to 14.8 mol% Z-1,1,1,4,4,4-hexafluoro-2-butene; or
from 99.8 to 80.8 mol% neopentane and 0.2 to 19.2 mol% Z-1,1,1,4,4,4-hexafluoro-2-butene; or
from 99.8 to 76.2 mol% neopentane and 0.2 to 23.8 mol% Z-1,1,1,4,4,4-hexafluoro-2-butene; or
from 99.8 to 61.8 mol% neopentane and 0.2 to 38.2 mol% Z-1,1,1,4,4,4-hexafluoro-2-butene; or
from 0.4 to 0.2 mol% neopentane and 99.6 to 99.8 mol% Z-1,1,1,4,4,4-hexafluoro-2-butene; or
from 99.8 to 69.8 mol% neopentane and 0.2 to 30.2 mol% Z-1,1,1,4,4,4-hexafluoro-2-butene; or
from 99.8 to 67.6 mol% neopentane and 0.2 to 32.4 mol% Z-1,1,1,4,4,4-hexafluoro-2-butene; or
from 99.8 to 95.0 mol% neopentane and 0.2 to 5 mol% Z-1,1,1,4,4,4-hexafluoro-2-butene; or
from 86.4 to 63.6 mol% neopentane and 13.6 to 36.4 mol% Z-1,1,1,4,4,4-hexafluoro-2-butene; or
from 0.4 to 0.2 mol% neopentane and 99.6 to 99.8 mol% Z-1,1,1,4,4,4-hexafluoro-2-butene; or
from 99.8 to 96.6 mol% neopentane and 0.2 to 3.4 mol% Z-1,1,1,4,4,4-hexafluoro-2-butene; or
from 80.6 to 59.6 mol% neopentane and 19.4 to 40.4 mol% Z-1,1,1,4,4,4-hexafluoro-2-butene; or
from 99.8 to 97.6 mol% neopentane and 0.2 to 2.4 mol% Z-1,1,1,4,4,4-hexafluoro-2-butene; or
from 74.2 to 56.0 mol% neopentane and 25.8 to 44.0 mol% Z-1,1,1,4,4,4-hexafluoro-2-butene; or
from 0.2 to 0.8 mol% neopentane and 99.2 to 99.8 mol% Z-1,1,1,4,4,4-hexafluoro-2-butene; or
from 99.8 to 98.2 mol% neopentane and 0.2 to 1.8 mol% Z-1,1,1,4,4,4-hexafluoro-2-butene; or
from 76.6 to 50.0 mol% neopentane and 23.4 to 50.0 mol% Z-1,1,1,4,4,4-hexafluoro-2-butene; or
from 1.0 to 0.2 mol% neopentane and 99.0 to 99.8 mol% Z-1,1,1,4,4,4-hexafluoro-2-butene.

In some embodiments, the composition comprising neopentane and Z-1,1,1,4,4,4-hexafluoro-2-butene comprises:
from 99.8 to 85.2 mol% neopentane and 0.2 to 14.8 mol% Z-1,1,1,4,4,4-hexafluoro-2-butene; or
from 99.8 to 80.8 mol% neopentane and 0.2 to 19.2 mol% Z-1,1,1,4,4,4-hexafluoro-2-butene; or
from 99.8 to 76.2 mol% neopentane and 0.2 to 23.8 mol% Z-1,1,1,4,4,4-hexafluoro-2-butene; or
from 99.8 to 61.8 mol% neopentane and 0.2 to 38.2 mol% Z-1,1,1,4,4,4-hexafluoro-2-butene; or
from 0.4 to 0.2 mol% neopentane and 99.6 to 99.8 mol% Z-1,1,1,4,4,4-hexafluoro-2-butene; or
from 99.8 to 69.8 mol% neopentane and 0.2 to 30.2 mol% Z-1,1,1,4,4,4-hexafluoro-2-butene; or
from 99.8 to 67.6 mol% neopentane and 0.2 to 32.4 mol% Z-1,1,1,4,4,4-hexafluoro-2-butene; or
from 99.8 to 95.0 mol% neopentane and 0.2 to 5 mol% Z-1,1,1,4,4,4-hexafluoro-2-butene; or
from 86.4 to 63.6 mol% neopentane and 13.6 to 36.4 mol% Z-1,1,1,4,4,4-hexafluoro-2-butene; or
from 0.4 to 0.2 mol% neopentane and 99.6 to 99.8 mol% Z-1,1,1,4,4,4-hexafluoro-2-butene; or
from 99.8 to 96.6 mol% neopentane and 0.2 to 3.4 mol% Z-1,1,1,4,4,4-hexafluoro-2-butene; or
from 80.6 to 59.6 mol% neopentane and 19.4 to 40.4 mol% Z-1,1,1,4,4,4-hexafluoro-2-butene; or
from 99.8 to 97.6 mol% neopentane and 0.2 to 2.4 mol% Z-1,1,1,4,4,4-hexafluoro-2-butene; or
from 74.2 to 56.0 mol% neopentane and 25.8 to 44.0 mol% Z-1,1,1,4,4,4-hexafluoro-2-butene; or
from 0.2 to 0.8 mol% neopentane and 99.2 to 99.8 mol% Z-1,1,1,4,4,4-hexafluoro-2-butene; or
from 99.8 to 98.2 mol% neopentane and 0.2 to 1.8 mol% Z-1,1,1,4,4,4-hexafluoro-2-butene; or
from 76.6 to 50.0 mol% neopentane and 23.4 to 50.0 mol% Z-1,1,1,4,4,4-hexafluoro-2-butene; or
from 1.0 to 0.2 mol% neopentane and 99.0 to 99.8 mol% Z-1,1,1,4,4,4-hexafluoro-2-butene;
wherein the composition has a boiling point of from -40°C to 120°C at a pressure of 1 atm (1.013 bar), for example, wherein the composition has a boiling point of from -40°C to 120°C at a pressure of 1 atm (1.013 bar), for example, - 40°C to 100°C, -40°C to 80°C, -40°C to 60°C, -40°C to 40°C, -40°C to 20°C, -40°C to 0°C, -40°C to -20°C, -20°C to 120°C, -20°C to 100°C, -20°C to 80°C, -20°C to 60°C, -20°C to 40°C, -20°C to 20°C, -20°C to 0°C, 0°C to 120°C, 0°C to 100°C, 0°C to 80°C, 0°C to 60°C, 0°C to 40°C, 0°C to 20°C, 20°C to 120°C, 20°C to 100°C, 20°C to 80°C, 20°C to 60°C, 20°C to 40°C, 40°C to 120°C, 40°C to 100°C, 40°C to 80°C, 40°C to 60°C, 60°C to 120°C, 60°C to 100°C, 60°C to 80°C, 80°C to 120°C, 80°C to 100°C, or 100°C to 120°C.

In some embodiments, the composition comprising neopentane and Z-1,1,1,4,4,4-hexafluoro-2-butene has a boiling point of -40°C at a pressure of 1 atm (1.013 bar).

In some embodiments, the composition comprising neopentane and Z-1,1,1,4,4,4-hexafluoro-2-butene has a boiling point of -20°C at a pressure of 1 atm (1.013 bar).

In some embodiments, the composition comprising neopentane and Z-1,1,1,4,4,4-hexafluoro-2-butene has a boiling point of 0°C at a pressure of 1 atm (1.013 bar).

In some embodiments, the composition comprising neopentane and Z-1,1,1,4,4,4-hexafluoro-2-butene has a boiling point of 20°C at a pressure of 1 atm (1.013 bar).

In some embodiments, the composition comprising neopentane and Z-1, 1, 1,4,4,4-hexafluoro-2-butene has a boiling point of 30°C at a pressure of 1 atm (1.013 bar).

In some embodiments, the composition comprising neopentane and Z-1,1,1,4,4,4-hexafluoro-2-butene has a boiling point of 40°C at a pressure of 1 atm (1.013 bar).

In some embodiments, the composition comprising neopentane and Z-1,1,1,4,4,4-hexafluoro-2-butene has a boiling point of 60°C at a pressure of 1 atm (1.013 bar).

In some embodiments, the composition comprising neopentane and Z-1, 1, 1,4,4,4-hexafluoro-2-butene has a boiling point of 80°C at a pressure of 1 atm (1.013 bar).

In some embodiments, the composition comprising neopentane and Z-1,1,1,4,4,4-hexafluoro-2-butene has a boiling point of 100°C at a pressure of 1 atm (1.013 bar).

In some embodiments, the composition comprising neopentane and Z-1,1,1,4,4,4-hexafluoro-2-butene has a boiling point of 120°C at a pressure of 1 atm (1.013 bar).

In some embodiments, the compositions provided herein further comprise one or more additional components (*i.e*., additives). In some embodiments, the one or more additional components are each independently selected from the group consisting of a lubricant, a pour point modifier, an anti-foam agent, a viscosity improver, an emulsifier, a dispersant, an oxidation inhibitor, an extreme pressure agent, a corrosion inhibitor, a detergent, a catalyst, a surfactant, a flame retardant, a preservative, a colorant, an antioxidant, a reinforcing agent, a filler, an antistatic agent, a solubilizing agents, an IR attenuating agent, a nucleating agent, a cell controlling agent, an extrusion aid, a stabilizing agent, a thermally insulating agent, a plasticizer, a viscosity modifier, an impact modifier, a gas barrier resin, a polymer modifier, a rheology modifier, an antibacterial agent, a vapor pressure modifier, a UV absorber, a cross-linking agent, a permeability modifier, a bitterant, a propellant, an acid catcher, or any mixture thereof.

### Methods of Use

The inventive compositions can be used in a wide range of applications, including, but not limited to, use as aerosol propellants, refrigerants, and heat transfer media.

### Uses as a Heat Transfer Medium

The compositions provided herein can act as a working fluid used to carry heat from a heat source to a heat sink. Such heat transfer compositions may also be useful as a refrigerant in a cycle wherein the fluid undergoes a phase change; that is, from a liquid to a gas and back, or vice versa.

Exemplary heat transfer systems include, but are not limited to, air conditioners, freezers, refrigerators, heat pumps, water chillers, flooded evaporator chillers, direct expansion chillers, walk-in coolers, heat pumps, mobile refrigerators, mobile air conditioning units, and combinations thereof.

In some embodiments, the compositions provided herein may be useful in mobile heat transfer systems, including refrigeration, air conditioning, or heat pump systems or apparatus. In some embodiments, the compositions provided herein may be useful in stationary heat transfer systems, including refrigeration, air conditioning, or heat pump systems or apparatus.

As used herein, the term "mobile heat transfer system" refers to any refrigeration, air conditioner, or heating apparatus incorporated into a transportation unit for the road, rail, sea or air. In addition, mobile refrigeration or air conditioner units include those apparatus that are independent of any moving carrier and are known as "intermodal" systems. Such intermodal systems include "containers' (combined sea/land transport) as well as "swap bodies" (combined road/rail transport).

As used herein, the term "stationary heat transfer system" refers to a system that is fixed in place during operation. A stationary heat transfer system may be located within or attached to a building, or may be a stand-alone device located out of doors, such as a soft drink vending machine. Such a stationary application may be a stationary air conditioning device or heat pump, including but not limited to, a chiller, a high temperature heat pumps, which may be a trans-critical heat pump (*e.g.,* one that operates with a condenser temperature above 50°C, 70°C, 80°C, 100°C, 120°C, 140°C, 160°C, 180°C, or 200°C), a residential, commercial or industrial air conditioning system, and may be window-mounted, ductless, ducted, packaged terminal, a chiller, and one that is exterior but connected to a building, such as a rooftop system. In stationary refrigeration applications, the compositions provided herein may be useful in high temperature, medium temperature and/or low temperature refrigeration equipment including commercial, industrial or residential refrigerators and freezers, ice machines, self-contained coolers and freezers, flooded evaporator chillers, direct expansion chillers, walk-in and reach-in coolers and freezers, and combination systems. In some embodiments, the compositions provided herein may be used in supermarket refrigerator systems.

In some embodiments, the compositions provided herein may be useful in methods for producing cooling, producing heating, and transferring heat.

In some embodiments, the present application provides a method for producing cooling, comprising evaporating a composition provided herein in the vicinity of a body to be cooled, and thereafter condensing said composition.

In some embodiments, the present application provides a method for producing heating, comprising condensing a composition provided herein in the vicinity of a body to be heated, and thereafter evaporating said compositions.

In some embodiments, the present application provides a method of using a composition provided herein as a heat transfer fluid composition. In some embodiments, the method comprises transporting said composition from a heat source to a heat sink.

Any of the compositions provided herein may be useful as a replacement for a currently used ("incumbent") refrigerant, including, but not limited to, R-123 (or HFC-123, 2,2-dichloro-1,1,1-trifluoroethane), R-11 (or CFC-11, trichlorofluoromethane), R-12 (or CFC-12, dichlorodifluoromethane), R-22 (chlorodifluoromethane), R-245fa (or HFC-245fa, 1,1,1,3,3-pentafluoropropane), R-114 (or CFC-114, 1,2-dichloro-1,1,2,2-tetrafluoroethane), R-236fa (or HFC-236fa, 1,1,1,3,3,3-hexafluoropropane), R-236ea (or HFC-236ea, 1,1,1,2,3,3-hexafluoropropane), and R-124 (or HCFC-124, 2-chloro-1,1,1,2-tetrafluoroethane), among others.

As used herein, the term "incumbent refrigerant" refers to the refrigerant for which the heat transfer system was designed to operate, or the refrigerant that is resident in the heat transfer system.

In some embodiments, the present application provides a method for operating a heat transfer system or for transferring heat that is designed to operate with an incumbent refrigerant by charging an empty system with a composition provided herein, or by substantially replacing said incumbent refrigerant with a composition provided herein.

As used herein, the term "substantially replacing" refers to allowing the incumbent refrigerant to drain from the system, or pumping the incumbent refrigerant from the system, and then charging the system with a composition of the present invention (*i.e.,* a composition provided herein). The system may be flushed with one or more quantities of the replacement refrigerant before being charged. It shall be understood that some small quantity of the incumbent refrigerant may be present in the system after the system has been charged with the composition provided herein.

In some embodiments, the present application provides a method for recharging a heat transfer system comprising an incumbent refrigerant and a lubricant, said method comprising substantially removing the incumbent refrigerant from the heat transfer system while retaining a substantial portion of the lubricant in said system and introducing a composition provided herein to the heat transfer system. In some embodiments, the lubricant in the system is partially replaced.

In some embodiments, the compositions provided herein may be used to top-off a refrigerant charge in a chiller. For example, if a chiller using HCFC-123 has diminished performance due to leakage of refrigerant, the compositions provided herein may be added to bring performance back up to specification.

In some embodiments, a heat exchange system comprising a composition of the invention is provided, wherein said system is selected from the group consisting of air conditioners, freezers, refrigerators, heat pumps, water chillers, flooded evaporator chillers, direct expansion chillers, walk-in coolers, heat pumps, mobile refrigerators, mobile air conditioning units, and systems having combinations thereof. In some embodiments, the composition provided herein may be useful in secondary loop systems wherein these compositions serve as the primary refrigerant thus providing cooling to a secondary heat transfer fluid that thereby cools a remote location.

Each of a vapor-compression refrigeration system, an air conditioning system, and a heat pump system includes as components an evaporator, a compressor, a condenser, and an expansion device. A vapor-compression cycle reuses refrigerant in multiple steps producing a cooling effect in one step and a heating effect in a different step. The cycle can be described simply as follows. Liquid refrigerant enters an evaporator through an expansion device, and the liquid refrigerant boils in the evaporator, by withdrawing heat from the environment, at a low temperature to form a vapor and produce cooling. The low-pressure vapor enters a compressor where the vapor is compressed to raise its pressure and temperature. The higher-pressure (compressed) vapor refrigerant then enters the condenser in which the refrigerant condenses and discharges its heat to the environment. The refrigerant returns to the expansion device through which the liquid expands from the higher-pressure level in the condenser to the low-pressure level in the evaporator, thus repeating the cycle.

In some embodiments, the present application provides a heat transfer system comprising a composition provided herein. In some embodiments, the present application provides a refrigeration, air-conditioning, or heat pump apparatus comprising a composition provided herein. In some embodiments, the present application provides a stationary refrigeration or air-conditioning apparatus comprising a composition provided herein. In some embodiments, the present application provides a mobile refrigeration or air conditioning apparatus comprising a composition provided herein.

### Propellants

In some embodiments, the present application provides a composition as described herein for use as a propellant *(e.g.,* in a sprayable composition). In some embodiments, the present application provides a sprayable composition comprising a composition provided herein. In some embodiments, the active ingredient to be sprayed together with inert ingredients, solvents, and other materials may also be present in the sprayable composition. In some embodiments, the sprayable composition is an aerosol. Suitable active materials to be sprayed include, but are not limited to, cosmetic materials, such as deodorants, perfumes, hair sprays, cleaners, and polishing agents, as well as medicinal materials such as anti-asthma and anti-halitosis medications.

In some embodiments, the present application provides a process for producing aerosol products. In some embodiments, the process comprises the step of adding a composition provided herein to one or more active ingredients in an aerosol container, wherein said composition functions as a propellant.

### EXAMPLES

The invention will be described in greater detail by way of specific examples. The following examples are offered for illustrative purposes, and are not intended to limit the invention in any manner. Those of skill in the art will readily recognize a variety of non-critical parameters which can be changed or modified to yield essentially the same results.

### Example 1. Compositions of E-HFO-1336mzz and neopentane

The binary system of E-HFO-1336mzz/neopentane was explored for potential azeotropic and near-azeotropic behavior. To determine the relative volatility of this binary system, the PTx method as described herein was used. The pressure in a PTx cell of known volume was measured at constant temperature of 29.88°C for various binary compositions. The collected experimental data are displayed in Table 1 below, where X2 = liquid mole fraction of E-HFO-1336mzz; Y2 = vapor mole fraction of E-HFO-1336mzz; Pexp = experimentally measured pressure; and Pcalc = pressure as calculated by NRTL model.

**Table 1.**

| **X2** | **Y2** | **Psia/bar, expt** | **Psia/bar, calc** | **(pcalc/pexp)-1** |
|---|---|---|---|---|
| 0 | 0 | 28.95/1.996 | - | - |
| 0.00365 | 0.01299 | 29.27/2.018 | 29.2493/2.017 | -7.07E-04 |
| 0.00843 | 0.02925 | 29.67/2.046 | 29.6307/2.043 | -1.32E-03 |
| 0.01809 | 0.05972 | 30.41/2.097 | 30.3664/2.094 | -1.43E-03 |
| 0.06643 | 0.17653 | 33.42/2.304 | 33.4348/2.305 | 4.43E-04 |
| 0.14533 | 0.29412 | 36.81/2.538 | 36.8276/2.539 | 4.79E-04 |
| 0.24612 | 0.38547 | 39.39/2.716 | 39.3919/2.716 | 4.76E-05 |
| 0.34667 | 0.44894 | 40.83/2.815 | 40.8352/2.815 | 1.27E-04 |
| 0.44829 | 0.50201 | 41.62/2.870 | 41.6126/2.869 | -1.78E-04 |
| 0.56542 | 0.56068 | 41.87/2.887 | 41.8789/2.887 | 2.12E-04 |
| 0.65475 | 0.60949 | 41.63/2.870 | 41.6328/2.870 | 6.73E-05 |
| 0.75779 | 0.67766 | 40.75/2.810 | 40.7363/2.809 | -3.36E-04 |
| 0.85193 | 0.7619 | 39.11/2.697 | 39.0868/2.695 | -5.94E-04 |
| 0.9333 | 0.86793 | 36.67/2.528 | 36.6737/2.529 | 1.02E-04 |
| 0.97972 | 0.95357 | 34.66/2.390 | 34.6996/2.392 | 1.14E-03 |
| 0.99014 | 0.97659 | 34.14/2.354 | 34.1806/2.357 | 1.19E-03 |
| 0.99356 | 0.98453 | 33.96/2.341 | 34.0032/2.344 | 1.27E-03 |
| 1 | 1 | 33.66/2.321 | - | - |

FIG. 1 displays a plot of the pressure vs composition data over the compositional range of 0-1 liquid mole fraction of E-HFO-1336mzz. The top curve of FIG. 1 represents the bubble point ("BP") locus, and the bottom curve of FIG. 1 represents the dew point ("DP") locus. FIG. 1 demonstrates the formation of an azeotrope at 29.88°C, of composition 0.552 mole fraction E-1,1,1,4,4,4-hexafluoro-2-butene and 0.448 mole fraction neopentane, as evidenced by the maximum in the Px diagram at a pressure of 41.8 psia (2.882 bar).

Based on these VLE data, interaction coefficients were extracted. The NRTL model was run over the temperature range of -40 to 120°C in increments of 10°C, allowing pressure to vary such that the azeotropic condition (X₂ = Y₂) was met. The resulting predictions of azeotropes in the E-HFO-1336mzz/neopentane system are displayed in Table 2.

**Table 2.**

| **Temp (°C)** | **Azeotrope Pressure (psi/bar)** | **E-HFO-1336mzz Vapor Mole Fraction** | **Neopentane Vapor Mole Fraction** |
|---|---|---|---|
| -40 | 2.0/0.138 | 0.40865 | 0.59135 |
| -30 | 3.5/0.241 | 0.43624 | 0.56376 |
| -20 | 5.9/0.407 | 0.46123 | 0.53877 |
| -10 | 9.3/0.641 | 0.48380 | 0.51620 |
| 0 | 14.1/0.972 | 0.50411 | 0.49589 |
| 10 | 20.9/1.441 | 0.52229 | 0.47771 |
| 20 | 30.0/2.068 | 0.53845 | 0.46155 |
| 30 | 41.9/2.889 | 0.55266 | 0.44734 |
| 40 | 57.4/3.958 | 0.56495 | 0.43505 |
| 50 | 77.0/5.309 | 0.57528 | 0.42472 |
| 60 | 101.7/7.012 | 0.58353 | 0.41647 |
| 70 | 132.5/9.136 | 0.58945 | 0.41055 |
| 80 | 171.2/11.804 | 0.59246 | 0.40754 |
| 90 | 220.8/15.224 | 0.59081 | 0.40919 |
| 100 | 278.1/19.174 | 0.58257 | 0.41744 |
| 110 | 331.2/22.835 | 0.57921 | 0.42079 |
| 120 | 389.6/26.862 | 0.57392 | 0.42608 |

The NRTL model was used to predict azeotropes over a pressure range of 1-30 atm (1.013 bar to 30.398 bar) at 1 atm (1.013 bar) increments, the results of which are displayed in Table 3.

**Table 3.**

| **Pressure (atm/bar)** | **Azeotrope Temperature (°C)** | **Vapor Mole Fraction E-HFO-1336mzz** | **Vapor Mole Fraction Neopentane** |
|---|---|---|---|
| 1/1.013 | 0.9 | 0.5059 | 0.4941 |
| 2/2.027 | 19.4 | 0.5376 | 0.4624 |
| 3/3.040 | 31.6 | 0.5547 | 0.4453 |
| 4/4.053 | 40.8 | 0.5659 | 0.4341 |
| 5/5.066 | 48.4 | 0.5737 | 0.4263 |
| 6/6.080 | 54.8 | 0.5795 | 0.4205 |
| 7/7.093 | 60.4 | 0.5838 | 0.4162 |
| 8/8.106 | 65.4 | 0.5871 | 0.4129 |
| 9/9.119 | 69.9 | 0.5894 | 0.4106 |
| 10/10.133 | 74.0 | 0.5911 | 0.4089 |
| 11/11.146 | 77.7 | 0.5921 | 0.4079 |
| 12/12.159 | 81.2 | 0.5926 | 0.4074 |
| 13/13.172 | 84.3 | 0.5925 | 0.4075 |
| 14/14.186 | 87.2 | 0.5920 | 0.4080 |
| 15/15.199 | 89.9 | 0.5908 | 0.4092 |
| 16/16.212 | 92.4 | 0.5890 | 0.4110 |
| 17/17.225 | 94.6 | 0.5856 | 0.4144 |
| 18/18.239 | 97.3 | 0.5834 | 0.4166 |
| 19/19.252 | 100.2 | 0.5825 | 0.4175 |
| 20/20.265 | 103.1 | 0.5817 | 0.4183 |
| 21/21.278 | 105.9 | 0.5808 | 0.4192 |
| 22/22.292 | 108.6 | 0.5798 | 0.4202 |
| 23/23.305 | 111.2 | 0.5787 | 0.4213 |
| 24/24.318 | 113.8 | 0.5775 | 0.4225 |
| 25/25.331 | 116.3 | 0.5762 | 0.4238 |
| 26/26.345 | 118.8 | 0.5747 | 0.4253 |
| 27/27.358 | 121.2 | 0.5731 | 0.4269 |
| 2828.371 | 123.5 | 0.5714 | 0.4286 |
| 29/29.384 | 125.8 | 0.5699 | 0.4301 |
| 30/30.398 | 128.0 | 0.5684 | 0.4316 |

The model was run over a temperature range from -40 to 120°C in 20°C increments, and also at 29.88°C for the purpose of comparison to experimentally measured results. At each temperature, the model was run over the full range from 0 to 1 of E-HFO-1336mzz liquid molar composition in increments of 0.002. Thus the model was run at a total of 5010 combinations of temperature and E-HFO-1336mzz liquid molar composition (10 temperatures x 501 compositions = 5010 combinations). Table 4 shows representative results in increments of 0.10 E-HFO-1336mzz liquid molar composition, or the boundaries of near-azeotropic behavior.

**Table 4.**

| **Temp (°C)** | **Liquid Mole Fraction E-HFO-1336mzz** | **Vapor Mole Fraction E-HFO-1336mzz** | **Liquid Mole Fraction Neopentane** | **Vapor Mole Fraction Neopentane** | **Bubble Point Pressure (psia/bar)** | **Dew Point Pressure (psia/bar)** | **[(BP-DP)/BP]* 100%** |
|---|---|---|---|---|---|---|---|
| -40 | 0.000 | 0.0000 | 1.0000 | 1.0000 | 1.6172/0.1115 | 1.6172/0.1115 | 0.00% |
| -40 | 0.002 | 0.0071 | 0.9980 | 0.9929 | 1.6255/0.1121 | 1.6196/0.1117 | 0.37% |
| -40 | 0.018 | 0.0573 | 0.9820 | 0.9427 | 1.6864/0.1163 | 1.6386/0.1130 | 2.84% |
| -40 | 0.020 | 0.0629 | 0.9800 | 0.9371 | 1.6933/0.1167 | 1.6409/0.1131 | 3.09% |
| -40 | 0.038 | 0.1077 | 0.9620 | 0.8923 | 1.7499/0.1207 | 1.6627/0.1146 | 4.98% |
| -40 | 0.040 | 0.1121 | 0.9600 | 0.8879 | 1.7555/0.1210 | 1.6651/0.1148 | *5.15%* |
| -40 | 0.230 | 0.3230 | 0.7700 | 0.6770 | 2.0094/0.1385 | 1.9074/0.1315 | 5.08% |
| -40 | 0.232 | 0.3242 | 0.7680 | 0.6758 | 2.0104/0.1386 | 1.9099/0.1317 | 5.00% |
| -40 | 0.282 | 0.3517 | 0.7180 | 0.6483 | 2.0309/0.1400 | 1.9688/0.1357 | 3.05% |
| -40 | 0.284 | 0.3527 | 0.7160 | 0.6473 | 2.0315/0.1401 | 1.9710/0.1359 | 2.98% |
| -40 | 0.300 | 0.3606 | 0.7000 | 0.6394 | 2.0361/0.1404 | 1.9878/0.1371 | 2.37% |
| -40 | 0.400 | 0.4050 | 0.6000 | 0.5950 | 2.0494/0.1413 | 2.0490/0.1413 | 0.02% |
| -40 | 0.500 | 0.4463 | 0.5000 | 0.5537 | 2.0410/0.1407 | 2.0020/0.1380 | 1.91% |
| -40 | 0.502 | 0.4472 | 0.4980 | 0.5528 | 2.0406/0.1407 | 2.0001/0.1379 | 1.99% |
| -40 | 0.524 | 0.4564 | 0.4760 | 0.5436 | 2.0359/0.1404 | 1.9766/0.1363 | 2.91% |
| -40 | 0.526 | 0.4573 | 0.4740 | 0.5427 | 2.0354/0.1403 | 1.9743/0.1361 | 3.00% |
| -40 | 0.528 | 0.4581 | 0.4720 | 0.5419 | 2.0349/0.1403 | 1.9720/0.1360 | 3.09% |
| -40 | 0.566 | 0.4747 | 0.4340 | 0.5253 | 2.0239/0.1395 | 1.9241/0.1327 | 4.93% |
| -40 | 0.568 | 0.4756 | 0.4320 | 0.5244 | 2.0232/0.1395 | 1.9214/0.1325 | 5.03% |
| -40 | 0.976 | 0.9109 | 0.0240 | 0.0891 | 1.4505/0.1000 | 1.3774/0.0950 | 5.04% |
| -40 | 0.978 | 0.9174 | 0.0220 | 0.0826 | 1.4429/0.0995 | 1.3753/0.0948 | 4.69% |
| -40 | 0.986 | 0.9450 | 0.0140 | 0.0550 | 1.4114/0.0973 | 1.3667/0.0942 | 3.17% |
| -40 | 0.988 | 0.9523 | 0.0120 | 0.0477 | 1.4033/0.0968 | 1.3646/0.0941 | 2.76% |
| -40 | 0.998 | 0.9916 | 0.0020 | 0.0084 | 1.3608/0.0938 | 1.3541/0.0934 | 0.50% |
| -40 | 1.000 | 1.0000 | 0.0000 | 0.0000 | 1.3520/0.0932 | 1.3520/0.0932 | 0.00% |
| -20 | 0.000 | 0.0000 | 1.0000 | 1.0000 | 4.4342/0.3057 | 4.4342/0.3057 | 0.00% |
| -20 | 0.002 | 0.0073 | 0.9980 | 0.9927 | 4.4582/0.3074 | 4.4408/0.3062 | 0.39% |
| -20 | 0.016 | 0.0533 | 0.9840 | 0.9467 | 4.6144/0.3182 | 4.4873/0.3094 | 2.76% |
| -20 | 0.018 | 0.0592 | 0.9820 | 0.9408 | 4.6352/0.3196 | 4.4940/0.3099 | 3.05% |
| -20 | 0.032 | 0.0973 | 0.9680 | 0.9027 | 4.7707/0.3189 | 4.5412/0.3131 | 4.81% |
| -20 | 0.034 | 0.1023 | 0.9660 | 0.8977 | 4.7888/0.3302 | 4.5481/0.3136 | 5.03% |
| -20 | 0.282 | 0.3758 | 0.7180 | 0.6242 | 5.7518/0.3966 | 5.4616/0.3766 | *5.05%* |
| -20 | 0.284 | 0.3769 | 0.7160 | 0.6231 | 5.7544/0.3968 | 5.4688/0.3771 | 4.96% |
| -20 | 0.300 | 0.3856 | 0.7000 | 0.6144 | 5.7738/0.3981 | 5.5252/0.3809 | 4.31% |
| -20 | 0.332 | 0.4020 | 0.6680 | 0.5980 | 5.8056/0.4003 | 5.6308/0.3882 | 3.01% |
| -20 | 0.334 | 0.4030 | 0.6660 | 0.5970 | 5.8073/0.4004 | 5.6370/0.3887 | 2.93% |
| -20 | 0.400 | 0.4340 | 0.6000 | 0.5660 | 5.8469/0.4031 | 5.8021/0.4000 | 0.77% |
| -20 | 0.500 | 0.4784 | 0.5000 | 0.5216 | 5.8538/0.4036 | 5.8357/0.4024 | 0.31% |
| -20 | 0.592 | 0.5209 | 0.4080 | 0.4791 | 5.8059/0.4003 | 5.6328/0.3884 | 2.98% |
| -20 | 0.594 | 0.5219 | 0.4060 | 0.4781 | 5.8043/0.4002 | 5.6267/0.3879 | 3.06% |
| -20 | 0.600 | 0.5248 | 0.4000 | 0.4752 | 5.7991/0.3998 | 5.6082/0.3867 | 3.29% |
| -20 | 0.642 | 0.5464 | 0.3580 | 0.4536 | 5.7551/0.3968 | 5.4677/0.3770 | 4.99% |
| -20 | 0.644 | 0.5475 | 0.3560 | 0.4525 | 5.7527/0.3966 | 5.4607/0.3765 | 5.08% |
| -20 | 0.964 | 0.8941 | 0.0360 | 0.1059 | 4.5456/0.3134 | 4.3150/0.2975 | 5.07% |
| -20 | 0.966 | 0.8991 | 0.0340 | 0.1009 | 4.5285/0.3122 | 4.3087/0.2971 | 4.85% |
| -20 | 0.982 | 0.9425 | 0.0180 | 0.0575 | 4.3841/0.3023 | 4.2584/0.2936 | 2.87% |
| -20 | 0.998 | 0.9931 | 0.0020 | 0.0069 | 4.2241/0.2912 | 4.2091/0.2902 | 0.36% |
| -20 | 1.000 | 1.0000 | 0.0000 | 0.0000 | 4.2030/0.2898 | 4.2030/0.2898 | 0.00% |
| 0 | 0.000 | 0.0000 | 1.0000 | 1.0000 | 10.3222/0.7117 | 10.3222/0.7117 | 0.00% |
| 0 | 0.002 | 0.0073 | 0.9980 | 0.9927 | 10.3796/0.7156 | 10.3379/0.7128 | 0.40% |
| 0 | 0.016 | 0.0539 | 0.9840 | 0.9461 | 10.7565/0.7416 | 10.4483/0.7204 | 2.86% |
| 0 | 0.018 | 0.0600 | 0.9820 | 0.9400 | 10.8070/0.7451 | 10.4642/0.7215 | 3.17% |
| 0 | 0.030 | 0.0937 | 0.9700 | 0.9063 | 11.0938/0.7649 | 10.5606/0.7281 | 4.81% |
| 0 | 0.032 | 0.0989 | 0.9680 | 0.9011 | 11.1391/0.7680 | 10.5768/0.7292 | *5.05%* |
| 0 | 0.322 | 0.4155 | 0.6780 | 0.5845 | 13.8866/0.9574 | 13.1876/0.9093 | 5.03% |
| 0 | 0.324 | 0.4166 | 0.6760 | 0.5834 | 13.8927/0.9579 | 13.2051/0.9105 | 4.95% |
| 0 | 0.370 | 0.4405 | 0.6300 | 0.5595 | 14.0094/0.9659 | 13.5832/0.9365 | 3.04% |
| 0 | 0.372 | 0.4415 | 0.6280 | 0.5585 | 14.0136/0.9662 | 13.5983/0.9376 | 2.96% |
| 0 | 0.400 | 0.4552 | 0.6000 | 0.5448 | 14.0645/0.9697 | 13.7933/0.9510 | 1.93% |
| 0 | 0.500 | 0.5022 | 0.5000 | 0.4978 | 14.1454/0.9753 | 14.1449/0.9753 | 0.00% |
| 0 | 0.600 | 0.5508 | 0.4000 | 0.4492 | 14.0751/0.9704 | 13.8675/0.9561 | 1.47% |
| 0 | 0.648 | 0.5764 | 0.3520 | 0.4236 | 13.9817/0.9640 | 13.5701/0.9356 | 2.94% |
| 0 | 0.650 | 0.5775 | 0.3500 | 0.4225 | 13.9768/0.9637 | 13.5562/0.9347 | 3.01% |
| 0 | 0.700 | 0.6073 | 0.3000 | 0.3927 | 13.8276/0.9534 | 13.1823/0.9089 | 4.67% |
| 0 | 0.710 | 0.6137 | 0.2900 | 0.3863 | 13.7907/0.9508 | 13.1028/0.9034 | 4.99% |
| 0 | 0.712 | 0.6150 | 0.2880 | 0.3850 | 13.7830/0.9503 | 13.0868/0.9023 | 5.05% |
| 0 | 0.948 | 0.8743 | 0.0520 | 0.1257 | 11.7385/0.8093 | 11.1494/0.7687 | 5.02% |
| 0 | 0.950 | 0.8782 | 0.0500 | 0.1218 | 11.7061/0.8071 | 11.1339/0.7677 | 4.89% |
| 0 | 0.972 | 0.9259 | 0.0280 | 0.0741 | 11.3228/0.7807 | 10.9651/0.7560 | 3.16% |
| 0 | 0.974 | 0.9306 | 0.0260 | 0.0694 | 11.2854/0.7781 | 10.9499/0.7550 | 2.97% |
| 0 | 0.998 | 0.9941 | 0.0020 | 0.0059 | 10.7988/0.7446 | 10.7698/0.7426 | 0.27% |
| 0 | 1.000 | 1.0000 | 0.0000 | 0.0000 | 10.7549/0.7415 | 10.7549/0.7415 | 0.00% |
| 20 | 0.000 | 0.0000 | 1.0000 | 1.0000 | 21.1399/1.4575 | 21.1399/1.4575 | 0.00% |
| 20 | 0.002 | 0.0073 | 0.9980 | 0.9927 | 21.2595/1.4658 | 21.1727/1.4598 | 0.41% |
| 20 | 0.016 | 0.0537 | 0.9840 | 0.9463 | 22.0503/1.5203 | 21.4048/1.4758 | 2.93% |
| 20 | 0.018 | 0.0598 | 0.9820 | 0.9402 | 22.1570/1.5277 | 21.4382/1.4781 | 3.24% |
| 20 | 0.030 | 0.0938 | 0.9700 | 0.9062 | 22.7665/1.5697 | 21.6408/1.4921 | 4.94% |
| 20 | 0.032 | 0.0990 | 0.9680 | 0.9010 | 22.8632/1.5764 | 21.6748/1.4944 | 5.20% |
| 20 | 0.352 | 0.4450 | 0.6480 | 0.5550 | 29.3816/2.0258 | 27.8860/1.9227 | 5.09% |
| 20 | 0.354 | 0.4461 | 0.6460 | 0.5539 | 29.3947/2.0267 | 27.9239/1.9253 | 5.00% |
| 20 | 0.400 | 0.4701 | 0.6000 | 0.5299 | 29.6494/2.0443 | 28.7384/1.9814 | 3.07% |
| 20 | 0.402 | 0.4711 | 0.5980 | 0.5289 | 29.6586/2.0449 | 28.7708/1.9837 | 2.99% |
| 20 | 0.500 | 0.5195 | 0.5000 | 0.4805 | 29.9403/2.0643 | 29.8645/2.0591 | 0.25% |
| 20 | 0.600 | 0.5700 | 0.4000 | 0.4300 | 29.9002/2.0615 | 29.7282/2.0497 | 0.58% |
| 20 | 0.698 | 0.6265 | 0.3020 | 0.3735 | 29.4990/2.0339 | 28.6171/1.9731 | 2.99% |
| 20 | 0.700 | 0.6278 | 0.3000 | 0.3722 | 29.4863/2.0330 | 28.5883/1.9711 | 3.05% |
| 20 | 0.776 | 0.6821 | 0.2240 | 0.3179 | 28.8389/1.9884 | 27.3994/1.8891 | 4.99% |
| 20 | 0.778 | 0.6838 | 0.2220 | 0.3162 | 28.8169/1.9869 | 27.3663/1.8868 | 5.03% |
| 20 | 0.922 | 0.8431 | 0.0780 | 0.1569 | 26.2733/1.8115 | 24.9483/1.7201 | 5.04% |
| 20 | 0.924 | 0.8462 | 0.0760 | 0.1538 | 26.2206/1.8078 | 24.9152/1.7178 | 4.98% |
| 20 | 0.964 | 0.9172 | 0.0360 | 0.0828 | 25.0275/1.7256 | 24.2620/1.6728 | 3.06% |
| 20 | 0.966 | 0.9213 | 0.0340 | 0.0787 | 24.9602/1.7209 | 24.2297/1.6706 | 2.93% |
| 20 | 0.998 | 0.9948 | 0.0020 | 0.0052 | 23.7709/1.6389 | 23.7203/1.6355 | 0.21% |
| 20 | 1.000 | 1.0000 | 0.0000 | 0.0000 | 23.6889/1.6333 | 23.6889/1.6333 | 0.00% |
| 29.88 | 0.000 | 0.0000 | 1.0000 | 1.0000 | 28.9758/1.9978 | 28.9758/1.9978 | 0.00% |
| 29.88 | 0.002 | 0.0072 | 0.9980 | 0.9928 | 29.1409/2.0092 | 29.0215/2.0010 | 0.41% |
| 29.88 | 0.016 | 0.0534 | 0.9840 | 0.9466 | 30.2362/2.0847 | 29.3445/2.0232 | 2.95% |
| 29.88 | 0.018 | 0.0595 | 0.9820 | 0.9405 | 30.3844/2.0949 | 29.3912/2.0265 | 3.27% |
| 29.88 | 0.030 | 0.0934 | 0.9700 | 0.9066 | 31.2334/2.1535 | 29.6733/2.0459 | 5.00% |
| 29.88 | 0.032 | 0.0986 | 0.9680 | 0.9014 | 31.3685/2.1628 | 29.7208/2.0492 | 5.25% |
| 29.88 | 0.366 | 0.4575 | 0.6340 | 0.5425 | 40.9262/2.8218 | 38.8602/2.6793 | 5.05% |
| 29.88 | 0.368 | 0.4586 | 0.6320 | 0.5414 | 40.9445/2.8230 | 38.9135/2.6830 | 4.96% |
| 29.88 | 0.370 | 0.4597 | 0.6300 | 0.5403 | 40.9626/2.8243 | 38.9666/2.6867 | 4.87% |
| 29.88 | 0.372 | 0.4608 | 0.6280 | 0.5392 | 40.9805/2.8255 | 39.0194/2.6903 | 4.79% |
| 29.88 | 0.374 | 0.4618 | 0.6260 | 0.5382 | 40.9981/2.8267 | 39.0720/2.6939 | 4.70% |
| 29.88 | 0.376 | 0.4629 | 0.6240 | 0.5371 | 41.0155/2.8279 | 39.1243/2.6975 | 4.61% |
| 29.88 | 0.378 | 0.4640 | 0.6220 | 0.5360 | 41.0327/2.8291 | 39.1763/2.7011 | 4.52% |
| 29.88 | 0.380 | 0.4650 | 0.6200 | 0.5350 | 41.0497/2.8303 | 39.2280/2.7047 | 4.44% |
| 29.88 | 0.382 | 0.4661 | 0.6180 | 0.5339 | 41.0664/2.8314 | 39.2794/2.7082 | 4.35% |
| 29.88 | 0.384 | 0.4672 | 0.6160 | 0.5328 | 41.0829/2.8326 | 39.3305/2.7117 | 4.27% |
| 29.88 | 0.386 | 0.4682 | 0.6140 | 0.5318 | 41.0992/2.8337 | 39.3814/2.7153 | 4.18% |
| 29.88 | 0.388 | 0.4693 | 0.6120 | 0.5307 | 41.1152/2.8348 | 39.4319/2.7187 | 4.09% |
| 29.88 | 0.390 | 0.4703 | 0.6100 | 0.5297 | 41.1311/2.8359 | 39.4820/2.7222 | 4.01% |
| 29.88 | 0.392 | 0.4714 | 0.6080 | 0.5286 | 41.1467/2.8370 | 39.5319/2.7256 | 3.92% |
| 29.88 | 0.394 | 0.4724 | 0.6060 | 0.5276 | 41.1621/2.8380 | 39.5814/2.7290 | 3.84% |
| 29.88 | 0.396 | 0.4735 | 0.6040 | 0.5265 | 41.1773/2.8391 | 39.6305/2.7324 | 3.76% |
| 29.88 | 0.398 | 0.4745 | 0.6020 | 0.5255 | 41.1922/2.8401 | 39.6793/2.7358 | 3.67% |
| 29.88 | 0.400 | 0.4756 | 0.6000 | 0.5244 | 41.2070/2.8411 | 39.7278/2.7391 | 3.59% |
| 29.88 | 0.414 | 0.4828 | 0.5860 | 0.5172 | 41.3043/2.8478 | 40.0558/2.7618 | 3.02% |
| 29.88 | 0.416 | 0.4838 | 0.5840 | 0.5162 | 41.3173/2.8487 | 40.1010/2.7649 | 2.94% |
| 29.88 | 0.500 | 0.5260 | 0.5000 | 0.4740 | 41.6894/2.8744 | 41.4985/2.8612 | 0.46% |
| 29.88 | 0.600 | 0.5774 | 0.4000 | 0.4226 | 41.6991/2.8751 | 41.5591/2.8654 | 0.34% |
| 29.88 | 0.700 | 0.6359 | 0.3000 | 0.3641 | 41.1831/2.8395 | 40.1523/2.7684 | 2.50% |
| 29.88 | 0.718 | 0.6478 | 0.2820 | 0.3522 | 41.0224/2.8284 | 39.8037/2.7444 | 2.97% |
| 29.88 | 0.720 | 0.6491 | 0.2800 | 0.3509 | 41.0031/2.8271 | 39.7638/2.7416 | 3.02% |
| 29.88 | 0.800 | 0.7104 | 0.2000 | 0.2896 | 39.9532/2.7547 | 38.0322/2.6222 | 4.81% |
| 29.88 | 0.812 | 0.7211 | 0.1880 | 0.2789 | 39.7420/2.7401 | 37.7579/2.6033 | 4.99% |
| 29.88 | 0.814 | 0.7229 | 0.1860 | 0.2771 | 39.7053/2.7376 | 37.7120/2.6002 | 5.02% |
| 29.88 | 0.902 | 0.8206 | 0.0980 | 0.1794 | 37.5605/2.5897 | 35.6725/2.4595 | 5.03% |
| 29.88 | 0.904 | 0.8233 | 0.0960 | 0.1767 | 37.4977/2.5854 | 35.6263/2.4563 | 4.99% |
| 29.88 | 0.960 | 0.9133 | 0.0400 | 0.0867 | 35.4128/2.4416 | 34.3478/2.3682 | 3.01% |
| 29.88 | 0.962 | 0.9171 | 0.0380 | 0.0829 | 35.3253/2.4356 | 34.3028/2.3651 | 2.89% |
| 29.88 | 0.998 | 0.9951 | 0.0020 | 0.0049 | 33.5673/2.3144 | 33.5026/2.3099 | 0.19% |
| 29.88 | 1.000 | 1.0000 | 0.0000 | 0.0000 | 33.4587/2.3069 | 33.4587/2.3069 | 0.00% |
| 40 | 0.000 | 0.0000 | 1.0000 | 1.0000 | 39.1175/2.6971 | 39.1175/2.6971 | 0.00% |
| 40 | 0.002 | 0.0071 | 0.9980 | 0.9929 | 39.3421/2.7125 | 39.1803/2.7014 | 0.41% |
| 40 | 0.016 | 0.0529 | 0.9840 | 0.9471 | 40.8366/2.8156 | 39.6247/2.7320 | 2.97% |
| 40 | 0.018 | 0.0590 | 0.9820 | 0.9410 | 41.0395/2.8296 | 39.6889/2.7365 | 3.29% |
| 40 | 0.028 | 0.0873 | 0.9720 | 0.9127 | 42.0165/2.8969 | 40.0121/2.7587 | 4.77% |
| 40 | 0.030 | 0.0927 | 0.9700 | 0.9073 | 42.2047/2.9099 | 40.0772/2.7632 | 5.04% |
| 40 | 0.378 | 0.4681 | 0.6220 | 0.5319 | 56.1782/3.8734 | 53.3429/3.6779 | 5.05% |
| 40 | 0.380 | 0.4692 | 0.6200 | 0.5308 | 56.2040/3.8751 | 53.4172/3.6830 | 4.96% |
| 40 | 0.400 | 0.4800 | 0.6000 | 0.5200 | 56.4444/3.8917 | 54.1395/3.7328 | 4.08% |
| 40 | 0.426 | 0.4936 | 0.5740 | 0.5064 | 56.7116/3.9101 | 55.0067/3.7926 | 3.01% |
| 40 | 0.428 | 0.4947 | 0.5720 | 0.5053 | 56.7301/3.9114 | 55.0694/3.7969 | 2.93% |
| 40 | 0.500 | 0.5315 | 0.5000 | 0.4685 | 57.2133/3.9447 | 56.8210/3.9177 | 0.69% |
| 40 | 0.600 | 0.5837 | 0.4000 | 0.4163 | 57.3115/3.9515 | 57.2081/3.9444 | 0.18% |
| 40 | 0.700 | 0.6429 | 0.3000 | 0.3571 | 56.6735/3.9075 | 55.4940/3.8262 | 2.08% |
| 40 | 0.736 | 0.6674 | 0.2640 | 0.3326 | 56.2229/3.8764 | 54.5604/3.7618 | 2.96% |
| 40 | 0.738 | 0.6688 | 0.2620 | 0.3312 | 56.1938/3.8744 | 54.5054/3.7580 | 3.00% |
| 40 | 0.740 | 0.6702 | 0.2600 | 0.3298 | 56.1644/3.8724 | 54.4501/3.7542 | 3.05% |
| 40 | 0.800 | 0.7176 | 0.2000 | 0.2824 | 55.0530/3.7958 | 52.6872/3.6327 | 4.30% |
| 40 | 0.900 | 0.8239 | 0.1000 | 0.1761 | 51.9480/3.5817 | 49.5417/3.4158 | 4.63% |
| 40 | 0.954 | 0.9060 | 0.0460 | 0.0940 | 49.3528/3.4028 | 47.8448/3.2988 | 3.06% |
| 40 | 0.956 | 0.9095 | 0.0440 | 0.0905 | 49.2407/3.3950 | 47.7826/3.2945 | 2.96% |
| 40 | 0.998 | 0.9953 | 0.0020 | 0.0047 | 46.5752/3.2112 | 46.4927/3.2056 | 0.18% |
| 40 | 1.000 | 1.0000 | 0.0000 | 0.0000 | 46.4321/3.2014 | 46.4321/3.2014 | 0.00% |
| 60 | 0.000 | 0.0000 | 1.0000 | 1.0000 | 66.7508/4.6023 | 66.7508/4.6023 | 0.00% |
| 60 | 0.002 | 0.0069 | 0.9980 | 0.9931 | 67.1411/4.6292 | 66.8632/4.6101 | 0.41% |
| 60 | 0.016 | 0.0516 | 0.9840 | 0.9484 | 69.7544/4.8094 | 67.6585/4.6649 | 3.00% |
| 60 | 0.018 | 0.0575 | 0.9820 | 0.9425 | 70.1115/4.8340 | 67.7734/4.6728 | 3.33% |
| 60 | 0.028 | 0.0854 | 0.9720 | 0.9146 | 71.8390/4.9531 | 68.3526/4.7127 | 4.85% |
| 60 | 0.030 | 0.0907 | 0.9700 | 0.9093 | 72.1732/4.9762 | 68.4694/4.7208 | 5.13% |
| 60 | 0.398 | 0.4842 | 0.6020 | 0.5158 | 99.4245/6.8551 | 94.3842/6.5076 | 5.07% |
| 60 | 0.400 | 0.4853 | 0.6000 | 0.5147 | 99.4736/6.8585 | 94.5224/6.5171 | 4.98% |
| 60 | 0.444 | 0.5092 | 0.5560 | 0.4908 | 100.4082/6.9229 | 97.3428/6.7116 | 3.05% |
| 60 | 0.446 | 0.5102 | 0.5540 | 0.4898 | 100.4443/6.9254 | 97.4591/6.7196 | 2.97% |
| 60 | 0.500 | 0.5388 | 0.5000 | 0.4612 | 101.2191/6.9788 | 100.0780/6.9001 | 1.13% |
| 60 | 0.600 | 0.5927 | 0.4000 | 0.4073 | 101.6574/7.0090 | 101.6166/7.0062 | 0.04% |
| 60 | 0.700 | 0.6531 | 0.3000 | 0.3469 | 100.6874/6.9422 | 99.1097/6.8334 | 1.57% |
| 60 | 0.764 | 0.6989 | 0.2360 | 0.3011 | 99.1535/6.8364 | 96.1892/6.6320 | 2.99% |
| 60 | 0.766 | 0.7004 | 0.2340 | 0.2996 | 99.0919/6.8321 | 96.0881/6.6250 | 3.03% |
| 60 | 0.800 | 0.7284 | 0.2000 | 0.2716 | 97.9001/6.7500 | 94.3058/6.5022 | 3.67% |
| 60 | 0.946 | 0.8988 | 0.0540 | 0.1012 | 88.7653/6.1202 | 86.0797/5.9350 | 3.03% |
| 60 | 0.948 | 0.9020 | 0.0520 | 0.0980 | 88.5816/6.1075 | 85.9667/5.9272 | 2.95% |
| 60 | 0.998 | 0.9956 | 0.0020 | 0.0044 | 83.3043/5.7436 | 83.1736/5.7346 | 0.16% |
| 60 | 1.000 | 1.0000 | 0.0000 | 0.0000 | 83.0634/5.7270 | 83.0634/5.7270 | 0.00% |
| 80 | 0.000 | 0.0000 | 1.0000 | 1.0000 | 106.7445/7.3598 | 106.7445/7.3598 | 0.00% |
| 80 | 0.002 | 0.0067 | 0.9980 | 0.9933 | 107.3858/7.4040 | 106.9363/7.3730 | 0.42% |
| 80 | 0.014 | 0.0441 | 0.9860 | 0.9559 | 111.1113/7.6609 | 108.0998/7.4532 | 2.71% |
| 80 | 0.016 | 0.0499 | 0.9840 | 0.9501 | 111.7122/7.7023 | 108.2958/7.4667 | 3.06% |
| 80 | 0.028 | 0.0828 | 0.9720 | 0.9172 | 115.2035/7.9430 | 109.4849/7.5487 | 4.96% |
| 80 | 0.030 | 0.0880 | 0.9700 | 0.9120 | 115.7668/7.9818 | 109.6852/7.5625 | 5.25% |
| 80 | 0.416 | 0.4950 | 0.5840 | 0.5050 | 167.0991/11.5211 | 158.5962/10.9348 | 5.09% |
| 80 | 0.418 | 0.4962 | 0.5820 | 0.5038 | 167.1918/11.5275 | 158.8495/10.9523 | 4.99% |
| 80 | 0.460 | 0.5194 | 0.5400 | 0.4806 | 168.8860/11.6443 | 163.7680/11.2914 | 3.03% |
| 80 | 0.462 | 0.5205 | 0.5380 | 0.4795 | 168.9549/11.6490 | 163.9796/11.3060 | 2.94% |
| 80 | 0.500 | 0.5412 | 0.5000 | 0.4588 | 170.0653/11.7256 | 167.5014/11.5488 | 1.51% |
| 80 | 0.600 | 0.5968 | 0.4000 | 0.4032 | 171.1919/11.8033 | 171.1762/11.8022 | 0.01% |
| 80 | 0.700 | 0.6587 | 0.3000 | 0.3413 | 169.5099/11.6873 | 167.0483/11.5176 | 1.45% |
| 80 | 0.768 | 0.7084 | 0.2320 | 0.2916 | 166.4468/11.4761 | 161.4755/11.1333 | 2.99% |
| 80 | 0.770 | 0.7100 | 0.2300 | 0.2900 | 166.329511.4680 | 161.2920/11.1207 | 3.03% |
| 80 | 0.800 | 0.7350 | 0.2000 | 0.2650 | 164.3623/11.3324 | 158.4508/10.9248 | 3.60% |
| 80 | 0.900 | 0.8391 | 0.1000 | 0.1609 | 154.5696/10.6572 | 148.3564/10.2288 | 4.02% |
| 80 | 0.944 | 0.9001 | 0.0560 | 0.0999 | 148.3449/10.2280 | 143.8749/9.9198 | 3.01% |
| 80 | 0.946 | 0.9032 | 0.0540 | 0.0968 | 148.0292/10.2063 | 143.6728/9.9059 | 2.94% |
| 80 | 0.998 | 0.9959 | 0.0020 | 0.0041 | 138.7018/9.5632 | 138.4930/9.5488 | 0.15% |
| 80 | 1.000 | 1.0000 | 0.0000 | 0.0000 | 138.2971/9.5353 | 138.2971/9.5353 | 0.00% |
| 100 | 0.000 | 0.0000 | 1.0000 | 1.0000 | 162.0606/11.1737 | 162.0606/11.1737 | 0.00% |
| 100 | 0.002 | 0.0063 | 0.9980 | 0.9937 | 163.0789/11.2439 | 162.3803/11.1957 | 0.43% |
| 100 | 0.014 | 0.0421 | 0.9860 | 0.9579 | 169.0432/11.6551 | 164.3232/11.3297 | 2.79% |
| 100 | 0.016 | 0.0477 | 0.9840 | 0.9523 | 170.0136/11.7220 | 164.6512/11.3523 | 3.15% |
| 100 | 0.026 | 0.0743 | 0.9740 | 0.9257 | 174.7674/12.0498 | 166.3096/11.4666 | 4.84% |
| 100 | 0.028 | 0.0793 | 0.9720 | 0.9207 | 175.6990/12.1140 | 166.6450/11.4898 | 5.15% |
| 100 | 0.400 | 0.4784 | 0.6000 | 0.5216 | 270.4013/18.6435 | 256.5804/17.6906 | 5.11% |
| 100 | 0.402 | 0.4796 | 0.5980 | 0.5204 | 270.5470/18.6536 | 257.2455/17.7365 | 4.92% |
| 100 | 0.438 | 0.5005 | 0.5620 | 0.4995 | 272.9099/18.8165 | 264.6125/18.2444 | 3.04% |
| 100 | 0.440 | 0.5016 | 0.5600 | 0.4984 | 273.0274/18.8246 | 264.9359/18.2667 | 2.96% |
| 100 | 0.500 | 0.5355 | 0.5000 | 0.4645 | 275.9366/19.0252 | 272.8608/18.8131 | 1.11% |
| 100 | 0.600 | 0.5928 | 0.4000 | 0.4072 | 278.2866/19.1872 | 278.3577/19.1921 | -0.03% |
| 100 | 0.700 | 0.6566 | 0.3000 | 0.3434 | 277.3187/19.1205 | 274.7297/18.9420 | 0.93% |
| 100 | 0.756 | 0.6978 | 0.2440 | 0.3022 | 274.8945/18.9533 | 266.7121/18.3892 | 2.98% |
| 100 | 0.758 | 0.6994 | 0.2420 | 0.3006 | 274.7739/18.9450 | 266.2803/18.3594 | 3.09% |
| 100 | 0.794 | 0.7295 | 0.2060 | 0.2705 | 271.9438/18.7499 | 258.5450/17.8261 | 4.93% |
| 100 | 0.796 | 0.7312 | 0.2040 | 0.2688 | 271.7221/18.7346 | 258.1176/17.7966 | 5.01% |
| 100 | 0.888 | 0.8269 | 0.1120 | 0.1731 | 251.5621/17.3446 | 238.9478/16.4749 | 5.01% |
| 100 | 0.890 | 0.8293 | 0.1100 | 0.1707 | 251.0532/17.3095 | 238.5452/16.4471 | 4.98% |
| 100 | 0.952 | 0.9148 | 0.0480 | 0.0852 | 233.6140/16.1071 | 226.4451/15.6128 | 3.07% |
| 100 | 0.954 | 0.9180 | 0.0460 | 0.0820 | 232.9938/16.0644 | 226.0677/15.5868 | 2.97% |
| 100 | 0.998 | 0.9960 | 0.0020 | 0.0040 | 218.3357/15.0537 | 217.9789/15.0291 | 0.16% |
| 100 | 1.000 | 1.0000 | 0.0000 | 0.0000 | 217.6210/15.0044 | 217.6210/15.0044 | 0.00% |
| 120 | 0.000 | 0.0000 | 1.0000 | 1.0000 | 236.1168/16.2797 | 236.1168/16.2797 | 0.00% |
| 120 | 0.002 | 0.0060 | 0.9980 | 0.9940 | 237.7196/16.3902 | 236.6528/16.3166 | 0.45% |
| 120 | 0.004 | 0.0118 | 0.9960 | 0.9882 | 239.3178/16.5004 | 237.1915/16.3538 | 0.89% |
| 120 | 0.006 | 0.0175 | 0.9940 | 0.9825 | 240.9116/16.6103 | 237.7328/16.3911 | 1.32% |
| 120 | 0.008 | 0.0232 | 0.9920 | 0.9768 | 242.5012/16.7199 | 238.2769/16.4286 | 1.74% |
| 120 | 0.010 | 0.0288 | 0.9900 | 0.9712 | 244.0867/16.8292 | 238.8236/16.4663 | 2.16% |
| 120 | 0.012 | 0.0342 | 0.9880 | 0.9658 | 245.6682/16.9382 | 239.3732/16.5042 | 2.56% |
| 120 | 0.014 | 0.0396 | 0.9860 | 0.9604 | 247.2460/17.0470 | 239.9254/16.5423 | 2.96% |
| 120 | 0.016 | 0.0449 | 0.9840 | 0.9551 | 248.8201/17.1555 | 240.4805/16.5806 | 3.35% |
| 120 | 0.024 | 0.0651 | 0.9760 | 0.9349 | 255.0835/17.5874 | 242.7293/16.7356 | 4.84% |
| 120 | 0.026 | 0.0700 | 0.9740 | 0.9300 | 256.6420/17.6948 | 243.2988/16.7749 | 5.20% |
| 120 | 0.370 | 0.4533 | 0.6300 | 0.5467 | 374.6714/25.8327 | 355.8479/24.5349 | 5.02% |
| 120 | 0.372 | 0.4545 | 0.6280 | 0.5455 | 374.9127/25.8493 | 356.3524/24.5696 | 4.95% |
| 120 | 0.426 | 0.4874 | 0.5740 | 0.5126 | 380.6432/26.2444 | 369.0815/25.4473 | 3.04% |
| 120 | 0.428 | 0.4886 | 0.5720 | 0.5114 | 380.8278/26.2572 | 369.5134/25.4771 | 2.97% |
| 120 | 0.500 | 0.5307 | 0.5000 | 0.4693 | 386.2785/26.6330 | 382.5140/26.3734 | 0.97% |
| 120 | 0.600 | 0.5896 | 0.4000 | 0.4104 | 390.1957/26.9031 | 390.4366/26.9197 | -0.06% |
| 120 | 0.700 | 0.6549 | 0.3000 | 0.3451 | 389.6846/26.8678 | 386.8445/26.6720 | 0.73% |
| 120 | 0.800 | 0.7341 | 0.2000 | 0.2659 | 383.6353/26.4507 | 375.4644/25.8874 | 2.13% |
| 120 | 0.900 | 0.8404 | 0.1000 | 0.1596 | 369.4663/25.4738 | 359.4971/24.7865 | 2.70% |
| 120 | 0.962 | 0.9304 | 0.0380 | 0.0696 | 353.7368/24.3893 | 343.1236/23.6575 | 3.00% |
| 120 | 0.964 | 0.9337 | 0.0360 | 0.0663 | 353.0395/24.3412 | 342.2334/23.5962 | 3.06% |
| 120 | 0.966 | 0.9371 | 0.0340 | 0.0629 | 352.3105/24.2910 | 341.3537/23.5355 | 3.11% |
| 120 | 0.972 | 0.9475 | 0.0280 | 0.0525 | 349.7199/24.1123 | 338.7722/23.3575 | 3.13% |
| 120 | 0.974 | 0.9511 | 0.0260 | 0.0489 | 348.1987/24.0075 | 337.9295/23.2994 | 2.95% |
| 120 | 0.998 | 0.9960 | 0.0020 | 0.0040 | 329.1331/22.6929 | 328.3877/22.6415 | 0.23% |
| 120 | 1.000 | 1.0000 | 0.0000 | 0.0000 | 327.6335/22.5895 | 327.6335/22.5895 | 0.00% |

Near-azeotropes formed between E-HFO-1336mzz and neopentane at 1 atm (1.013 bar) are shown in Table 5. Table 5 shows representative data in increments of 0.10 E-HFO-1336mzz liquid molar composition, or the boundaries of near-azeotropic behavior.

**Table 5.**

| **Pressure (atm)** | **Temp (°C)** | **Liquid Mole Fraction E-HFO-1336mzz** | **Vapor Mole Fraction E-HFO-1336mzz** | **Liquid Mole Fraction Neopentane** | **Liquid Mole Fraction Neopentane** | **Bubble Point Pressure (psia)** | **Dew Point Pressure (psia/bar)** | **[(BP-DP)/BP]* 100%** |
|---|---|---|---|---|---|---|---|---|
| 1.00* | 9.461 | 0 | 0 | 1 | 1 | 14.69595** | 14.69595/1.0133 | 0.00% |
| 1.00* | 9.305 | 0.002 | 0.01 | 1.00 | 0.993 | 14.696** | 14.636/1.0091 | 0.41% |
| 1.00* | 8.308 | 0.016 | 0.05 | 0.98 | 0.946 | 14.696** | 14.270/0.9839 | 2.90% |
| 1.00* | 8.177 | 0.018 | 0.06 | 0.98 | 0.940 | 14.696** | 14.225/0.9808 | 3.21% |
| 1.00* | 7.449 | 0.03 | 0.0938898 | 0.97 | 0.9061102 | 14.69595** | 13.98093/0.9640 | 4.87% |
| 1.00* | 7.336 | 0.032 | 0.0991343 | 0.968 | 0.9008656 | 14.69595** | 13.94488/0.9615 | 5.11% |
| 1.00* | 1.409 | 0.324 | 0.4177095 | 0.676 | 0.5822905 | 14.69595** | 13.95334/0.9620 | 5.05% |
| 1.00* | 1.195 | 0.37 | 0.4414781 | 0.63 | 0.5585219 | 14.69595** | 14.23698/0.9816 | 3.12% |
| 1.00* | 1.187 | 0.372 | 0.4424725 | 0.628 | 0.5575275 | 14.69595** | 14.24871/0.9824 | 3.04% |
| 1.00* | 1.180 | 0.374 | 0.4434643 | 0.626 | 0.5565357 | 14.69595** | 14.26035/0.9832 | 2.96% |
| 1.00* | 1.094 | 0.4 | 0.4561451 | 0.6 | 0.5438549 | 14.69595** | 14.40299/0.9931 | 1.99% |
| 1.00* | 0.946 | 0.5 | 0.5031367 | 0.5 | 0.4968633 | 14.69595** | 14.695/1.0132 | 0.01% |
| 1.00* | 1.065 | 0.6 | 0.5519321 | 0.4 | 0.4480679 | 14.69595** | 14.48902/0.9990 | 1.41% |
| 1.00* | 1.244 | 0.652 | 0.5800897 | 0.348 | 0.4199103 | 14.69595** | 14.2598/0.9832 | 2.97% |
| 1.00* | 1.252 | 0.654 | 0.5812312 | 0.346 | 0.4187688 | 14.69595** | 14.25034/0.9825 | 3.03% |
| 1.00* | 1.589 | 0.714 | 0.6181589 | 0.286 | 0.3818411 | 14.69595** | 13.96853/0.9631 | 4.95% |
| 1.00* | 1.603 | 0.716 | 0.6194943 | 0.284 | 0.3805057 | 14.69595** | 13.95961/0.9625 | 5.01% |
| 1.00* | 5.262 | 0.942 | 0.8666191 | 0.058 | 0.1333809 | 14.69595** | 13.95456/0.9621 | 5.04% |
| 1.00* | 5.325 | 0.944 | 0.8703764 | 0.056 | 0.1296236 | 14.69595** | 13.97141/0.9633 | 4.93% |
| 1.00* | 6.231 | 0.97 | 0.9241145 | 0.03 | 0.0758854 | 14.69595** | 14.24138/0.9819 | 3.09% |
| 1.00* | 6.308 | 0.972 | 0.9286651 | 0.028 | 0.0713348 | 14.69595** | 14.26647/0.9836 | 2.92% |
| 1.00* | 7.418184 | 0.998 | 0.9943818 | 0.002 | 0.00561824 | 14.69595** | 14.65994/1.0108 | 0.25% |
| 1.00* | 7.512796 | 1 | 1 | 0 | 0 | 14.69595** | 14.69595/1.0133 | 0.00% |

| | | | | | | | | |
|---|---|---|---|---|---|---|---|---|
| * 1.013 bar ** 1.0133 bar | | | | | | | | |

The detailed data in Tables 4-5 are broadly summarized in Table 6 below. From the results in Table 5, azeotrope-like compositions with differences of 3% or less between bubble point pressures and dew point pressures exist from:
(1) 0.002 to 0.016 mole fraction E-1336mzz and from 0.984 to 0.998 mole percent neopentane at 1 atmosphere pressure (1.013 bar) boiling at from 8.31 to 9.31 °C;
(2) 0.374 to 0.652 mole fraction E-1336mzz and from 0.384 to 0.626 mole percent neopentane at 1 atmosphere pressure (1.013 bar) boiling at from 0.95 to 1.24 °C; and
(3) 0.972 to 0.998mole fraction E-1336mzz and from 0.002 to 0.028 mole percent neopentane at 1 atmosphere pressure (1.013 bar) boiling at from 6.31 to 7.42 °C.

Ranges of 3% azeotrope-like compositions (based on [(BP-VP)/BP] x 100 ≤ 3) are listed in Table 6.

**Table 6.**

| **Components** | **Temp (°C)** | **E-HFO-1336mzz Vapor Mole Percentage Range (Remainder Neopentane)** |
|---|---|---|
| E-HFO-1336mzz / Neopentane | -40 | 0.002 to 0.018 and 0.284 to 0.524 and 0.988 to 0.998 |
| E-HFO-1336mzz / Neopentane | -20 | 0.002 to 0.016 and 0.334 to 0.592 and 0.982 to 0.998 |
| E-HFO-1336mzz / Neopentane | 0 | 0.002 to 0.016 and 0.372 to 0.648 and 0.974 to 0.998 |
| E-HFO-1336mzz / Neopentane | 20 | 0.002 to 0.016 and 0.402 to 0.698 and 0.966 to 0.998 |
| E-HFO-1336mzz / Neopentane | 29.88 | 0.002 to 0.016 and 0.416 to 0.718 and 0.962 to 0.998 |
| E-HFO-1336mzz / Neopentane | 40 | 0.002 to 0.016 and 0.428 to 0.736 and 0.956 to 0.998 |
| E-HFO-1336mzz / Neopentane | 60 | 0.002 to 0.016 and 0.446 to 0.764 and 0.948 to 0.009 |
| E-HFO-1336mzz / Neopentane | 80 | 0.002 to 0.014 and 0.462 to 0.768 and 0.946 to 0.998 |
| E-HFO-1336mzz / Neopentane | 100 | 0.002 to 0.014 and 0.440 to 0.756 and 0.954 to 0.998 |
| E-HFO-1336mzz / Neopentane | 120 | 0.002 to 0.014 and 0.428 to 0.962 and 0.974 to 0.998 |

### Example 2. Compositions of Z-HFO-1336mzz and Neopentane

The binary system of Z-HFO-1336mzz/neopentane was explored for potential azeotropic and near-azeotropic behavior. To determine the relative volatility of this binary system, the PTx method described herein was used. The pressure in a PTx cell of known volume was measured at constant temperature of 29.90°C for various binary compositions. The collected experimental data are displayed in Table 7 below, where X₂ = liquid mole fraction of neopentane; Y₂ = vapor mole fraction of neopentane; Pₑₓₚ = experimentally measured pressure; and P_{calc} = pressure as calculated by NRTL model.

**Table 7.**

| **X2** | **Y2** | **Psia/bar,expt** | **Psia/bar,calc** | **(pcalc/pexp)-1** |
|---|---|---|---|---|
| 0 | 0 | 12.98/0.895 | - | - |
| 0.00565 | 0.04447 | 13.53/0.933 | 13.5319/0.9330 | 1.38E-04 |
| 0.00915 | 0.06959 | 13.88/0.957 | 13.8641/0.9559 | -1.14E-03 |
| 0.0182 | 0.12772 | 14.67/1.011 | 14.6968/1.0133 | 1.83E-03 |
| 0.06537 | 0.32642 | 18.45/1.272 | 18.4289/1.2706 | -1.15E-03 |
| 0.14432 | 0.48593 | 22.92/1.580 | 22.9065/1.5793 | -5.87E-04 |
| 0.24575 | 0.58368 | 26.49/1.826 | 26.5246/1.8288 | 1.31E-03 |
| 0.34458 | 0.63707 | 28.61/1.973 | 28.6679/1.9766 | 2.02E-03 |
| 0.45163 | 0.67591 | 30.22/2.084 | 30.1073/2.0758 | -3.73E-03 |
| 0.55029 | 0.70455 | 30.96/2.135 | 30.9557/2.1343 | -1.38E-04 |
| 0.65079 | 0.73293 | 31.51/2.173 | 31.5177/2.1731 | 2.45E-04 |
| 0.75045 | 0.76664 | 31.79/2.192 | 31.806/2.1929 | 5.04E-04 |
| 0.8517 | 0.81802 | 31.66/2.183 | 31.6557/2.1826 | -1.37E-04 |
| 0.93498 | 0.8925 | 30.77/2.122 | 30.7664/2.1213 | -1.17E-04 |
| 0.98191 | 0.96298 | 29.6/2.041 | 29.6229/2.0424 | 7.74E-04 |
| 0.99116 | 0.98103 | 29.26/2.017 | 29.3112/2.0209 | 1.75E-03 |
| 0.99555 | 0.99022 | 29.1/2.006 | 29.1511/2.0099 | 1.76E-03 |
| 1 | 1 | 28.98/1.998 | - | - |

The vapor pressure vs. neopentane liquid mole fraction data shown in Table 7 are plotted in FIG. 2, with the experimental data points shown as solid points. The solid line represents bubble point predictions using the NRTL equation. The dashed line represents predicted dew points. FIG. 2 demonstrates the formation of an azeotrope at 29.90°C of the composition containing 0.220 mole fraction Z-1,1,1,4,4,4-hexafluoro-2-butene and 0.780 mole fraction neopentane, as evidenced by the maximum in the Px diagram at a pressure of 31.8 psia.

Based on these VLE data, interaction coefficients were extracted. The NRTL model was run over the temperature range of -40 to 120°C in increments of 10°C allowing pressure to vary such that the azeotropic condition (X₂ = Y₂) was met. The resulting predicted azeotropes in the Z-HFO-1336mzz/neopentane system, and the experimentally determined data at 29.90°C, are displayed in Table 8.

**Table 8.**

| **Temp (°C)** | **Azeotrope Pressure (psi)** | **Vapor Mole Fraction Z-HFO-1336mzz** | **Vapor Mole Fraction Neopentane** |
|---|---|---|---|
| -40 | 1.6 | 0.07883 | 0.92117 |
| -30 | 2.8 | 0.09995 | 0.90005 |
| -20 | 4.6 | 0.12089 | 0.87911 |
| -10 | 7.2 | 0.14154 | 0.85846 |
| 0 | 10.9 | 0.16187 | 0.83813 |
| 10 | 16.0 | 0.18187 | 0.81813 |
| 20 | 22.9 | 0.20154 | 0.79846 |
| 30 | 31.9 | 0.22092 | 0.77908 |
| 40 | 43.5 | 0.24008 | 0.75992 |
| 50 | 58.3 | 0.25908 | 0.74092 |
| 60 | 76.8 | 0.27803 | 0.72197 |
| 70 | 99.9 | 0.29709 | 0.70291 |
| 80 | 128.6 | 0.31656 | 0.68344 |
| 90 | 164.6 | 0.33709 | 0.66291 |
| 100 | 211.4 | 0.36145 | 0.63855 |
| 110 | 260.8 | 0.38626 | 0.61374 |
| 120 | 308.7 | 0.40156 | 0.59844 |

The model was used to predict azeotropes over a pressure range of 1-30 atm (1.013 bar to 30.398 bar) at 1 atm (1.013 bar) increments, the results of which are displayed in Table 9.

**Table 9.**

| **Pressure (atm/bar)** | **Azeotrope Temperature (°C)** | **Vapor Mole Fraction Z-HFO-1336mzz** | **Vapor Mole Fraction Neopentane** |
|---|---|---|---|
| 1/1.013 | 7.7 | 0.17728 | 0.82272 |
| 2/2.027 | 27.5 | 0.21605 | 0.78395 |
| 3/3.040 | 40.4 | 0.24089 | 0.75911 |
| 4/4.053 | 50.3 | 0.25963 | 0.74037 |
| 5/5.066 | 58.3 | 0.27489 | 0.72511 |
| 6/6.080 | 65.2 | 0.28788 | 0.71212 |
| 7/7.093 | 71.1 | 0.29927 | 0.70073 |
| 8/8.106 | 76.4 | 0.30948 | 0.69052 |
| 9/9.119 | 81.1 | 0.31879 | 0.68121 |
| 10/10.133 | 85.4 | 0.32741 | 0.67259 |
| 11/11.146 | 89.3 | 0.33551 | 0.66449 |
| 12/12.159 | 92.8 | 0.34325 | 0.65675 |
| 13/13.172 | 96.0 | 0.35079 | 0.64921 |
| 14/14.186 | 98.9 | 0.35839 | 0.64161 |
| 15/15.199 | 101.6 | 0.36666 | 0.63334 |
| 16/16.212 | 104.3 | 0.37595 | 0.62405 |
| 17/17.225 | 107.6 | 0.38215 | 0.61785 |
| 18/18.239 | 110.8 | 0.38757 | 0.61243 |
| 19/19.252 | 114.0 | 0.39255 | 0.60745 |
| 20/20.265 | 117.0 | 0.39718 | 0.60282 |
| 21/21.278 | 120.0 | 0.40153 | 0.59847 |
| 22/22.292 | 122.9 | 0.40563 | 0.59437 |
| 23/23.305 | 125.7 | 0.40952 | 0.59048 |
| 24/24.318 | 128.4 | 0.41322 | 0.58678 |
| 25/25.331 | 131.0 | 0.41674 | 0.58326 |
| 26/26.345 | 133.6 | 0.42010 | 0.57990 |
| 27/27.358 | 136.1 | 0.42332 | 0.57668 |
| 2828.371 | 138.5 | 0.42640 | 0.57360 |
| 29/29.384 | 140.9 | 0.42935 | 0.57065 |
| 30/30.398 | 143.2 | 0.43191 | 0.56809 |

The model was run over a temperature range from -40 to 120°C in 20 deg. increments, and also at 29.90°C for the purpose of comparison to experimentally measured results. At each temperature, the model was run over the full range from 0 to 1 of Z-HFO-1336mzz liquid molar composition in increments of 0.002. Thus the model was run at a total of 5010 combinations of temperature and Z-HFO-1336mzz liquid molar composition (10 temperatures x 501 compositions = 5010). Table 10 shows representative results in increments of 0.10 Z-HFO-1336mzz liquid molar composition, or the boundaries of near-azeotropic behavior.

**Table 10.**

| **Total Temp (°C)** | **Liquid Mole Fraction Z-HFO-1336mzz** | **Vapor Mole Fraction Z-HFO-1336mzz** | **Liquid Mole Fraction Neopentane** | **Vapor Mole Fraction Neopentane** | **Bubble Point Pressure (psia/bar)** | **Dew Point Pressure (psia/bar)** | **[(BP-DP)/BP]* 100%** |
|---|---|---|---|---|---|---|---|
| -40 | 0.000 | 0.0000 | 1.0000 | 1.0000 | 1.6172/0.1115 | 1.6172/0.1115 | 0.00% |
| -40 | 0.002 | 0.0031 | 0.9980 | 0.9969 | 1.6190/0.1116 | 1.6184/0.1116 | 0.04% |
| -40 | 0.100 | 0.0909 | 0.9000 | 0.9091 | 1.6437/0.1133 | 1.6413/0.1132 | 0.15% |
| -40 | 0.148 | 0.1110 | 0.8520 | 0.8890 | 1.6360/0.1128 | 1.5870/0.1094 | 2.99% |
| -40 | 0.150 | 0.1117 | 0.8500 | 0.8883 | 1.6356/0.1128 | 1.5824/0.1091 | 3.25% |
| -40 | 0.160 | 0.1150 | 0.8400 | 0.8850 | 1.6334/0.1126 | 1.5550/0.1072 | 4.80% |
| -40 | 0.162 | 0.1156 | 0.8380 | 0.8844 | 1.6329/0.1126 | 1.5487/0.1068 | 5.15% |
| -40 | 0.998 | 0.9546 | 0.0020 | 0.0454 | 0.3663/0.0253 | 0.3510/0.0242 | 4.18% |
| -40 | 1.000 | 1.0000 | 0.0000 | 0.0000 | 0.3503/0.0242 | 0.3503/0.0242 | 0.00% |
| -20 | 0.000 | 0.0000 | 1.0000 | 1.0000 | 4.4342/0.3057 | 4.4342/0.3057 | 0.00% |
| -20 | 0.002 | 0.0035 | 0.9980 | 0.9965 | 4.4412/0.3062 | 4.4382/0.3060 | 0.07% |
| -20 | 0.100 | 0.1085 | 0.9000 | 0.8915 | 4.5869/0.3163 | 4.5823/0.3159 | 0.10% |
| -20 | 0.192 | 0.1510 | 0.8080 | 0.8490 | 4.5692/0.3150 | 4.4375/0.3060 | 2.88% |
| -20 | 0.194 | 0.1516 | 0.8060 | 0.8484 | 4.5682/0.3150 | 4.4267/0.3052 | 3.10% |
| -20 | 0.208 | 0.1560 | 0.7920 | 0.8440 | 4.5608/0.3145 | 4.3389/0.2992 | 4.86% |
| -20 | 0.210 | 0.1566 | 0.7900 | 0.8434 | 4.5597/0.3144 | 4.3248/0.2982 | 5.15% |
| -20 | 0.996 | 0.9387 | 0.0040 | 0.0613 | 1.3342/0.0920 | 1.2616/0.0870 | 5.44% |
| -20 | 0.998 | 0.9682 | 0.0020 | 0.0318 | 1.2958/0.0890 | 1.2592/0.0868 | 2.82% |
| -20 | 1.000 | 1.0000 | 0.0000 | 0.0000 | 1.2568/0.0867 | 1.2568/0.0867 | 0.00% |
| 0 | 0.000 | 0.0000 | 1.0000 | 1.0000 | 10.3222/0.7117 | 10.3222/0.7117 | 0.00% |
| 0 | 0.002 | 0.0039 | 0.9980 | 0.9961 | 10.3431/0.7131 | 10.3328/0.7124 | 0.10% |
| 0 | 0.100 | 0.1241 | 0.9000 | 0.8759 | 10.8575/0.7486 | 10.7847/0.7436 | 0.67% |
| 0 | 0.200 | 0.1786 | 0.8000 | 0.8214 | 10.8959/0.7512 | 10.8317/0.7468 | 0.59% |
| 0 | 0.238 | 0.1921 | 0.7620 | 0.8079 | 10.8625/0.7489 | 10.5375/0.7265 | 2.99% |
| 0 | 0.240 | 0.1928 | 0.7600 | 0.8072 | 10.8603/0.7488 | 10.5148/0.7250 | 3.18% |
| 0 | 0.256 | 0.1977 | 0.7440 | 0.8023 | 10.8415/0.7475 | 10.3091/0.7108 | 4.91% |
| 0 | 0.258 | 0.1983 | 0.7420 | 0.8017 | 10.8390/0.7473 | 10.2807/0.7088 | 5.15% |
| 0 | 0.994 | 0.9329 | 0.0060 | 0.0671 | 3.8553/0.2658 | 3.6348/0.2506 | 5.72% |
| 0 | 0.996 | 0.9541 | 0.0040 | 0.0459 | 3.7760/0.2603 | 3.628010.2501 | 3.92% |
| 0 | 0.998 | 0.9764 | 0.0020 | 0.0236 | 3.6957/0.2548 | 3.6212/0.2497 | 2.02% |
| 0 | 1.000 | 1.0000 | 0.0000 | 0.0000 | 3.6144/0.2492 | 3.6144/0.2492 | 0.00% |
| 20 | 0.000 | 0.0000 | 1.0000 | 1.0000 | 21.1399/1.4575 | 21.1399/1.4575 | 0.00% |
| 20 | 0.002 | 0.0043 | 0.9980 | 0.9957 | 21.1914/1.4611 | 21.1640/1.4592 | 0.13% |
| 20 | 0.100 | 0.1376 | 0.9000 | 0.8624 | 22.6006/1.5583 | 22.2674/1.5353 | 1.47% |
| 20 | 0.200 | 0.2008 | 0.8000 | 0.7992 | 22.8812/1.5776 | 22.8811/1.5776 | 0.00% |
| 20 | 0.282 | 0.2326 | 0.7180 | 0.7674 | 22.7823/1.5708 | 22.1007/1.5238 | 2.99% |
| 20 | 0.284 | 0.2333 | 0.7160 | 0.7667 | 22.7778/1.5705 | 22.0583/1.5209 | 3.16% |
| 20 | 0.302 | 0.2390 | 0.6980 | 0.7610 | 22.7337/1.5674 | 21.6320/1.4915 | 4.85% |
| 20 | 0.304 | 0.2396 | 0.6960 | 0.7604 | 22.7284/1.5671 | 21.5803/1.4879 | 5.05% |
| 20 | 0.992 | 0.9312 | 0.0080 | 0.0688 | 9.3530/0.6449 | 8.8251/0.6085 | 5.64% |
| 20 | 0.994 | 0.9473 | 0.0060 | 0.0527 | 9.2073/0.6348 | 8.8088/0.6073 | 4.33% |
| 20 | 0.996 | 0.9641 | 0.0040 | 0.0359 | 9.0599/0.6247 | 8.7925/0.6062 | 2.95% |
| 20 | 0.998 | 0.9816 | 0.0020 | 0.0184 | 8.9109/0.6144 | 8.7762/0.6051 | 1.51% |
| 20 | 1.000 | 1.0000 | 0.0000 | 0.0000 | 8.7600/0.6040 | 8.7600/0.6040 | 0.00% |
| 29.90 | 0.000 | 0.0000 | 1.0000 | 1.0000 | 28.9936/1.9990 | 28.9936/1.9990 | 0.00% |
| 29.90 | 0.002 | 0.0044 | 0.9980 | 0.9956 | 29.0702/2.0043 | 29.0283/2.0014 | 0.14% |
| 29.90 | 0.100 | 0.1436 | 0.9000 | 0.8564 | 31.2508/2.1547 | 30.6506/2.1133 | 1.92% |
| 29.90 | 0.200 | 0.2109 | 0.8000 | 0.7891 | 31.7848/2.1915 | 31.7473/2.1889 | 0.12% |
| 29.90 | 0.300 | 0.2514 | 0.7000 | 0.7486 | 31.6654/2.1833 | 30.7977/2.1234 | 2.74% |
| 29.90 | 0.302 | 0.2521 | 0.6980 | 0.7479 | 31.6593/2.1828 | 30.7436/2.1197 | 2.89% |
| 29.90 | 0.304 | 0.2527 | 0.6960 | 0.7473 | 31.6530/2.1824 | 30.6882/2.1159 | 3.05% |
| 29.90 | 0.326 | 0.2599 | 0.6740 | 0.7401 | 31.5767/2.1771 | 29.9999/2.0684 | 4.99% |
| 29.90 | 0.328 | 0.2605 | 0.6720 | 0.7395 | 31.5691/2.1766 | 29.9311/2.0637 | 5.19% |
| 29.90 | 0.990 | 0.9240 | 0.0100 | 0.0760 | 13.8642/0.9559 | 13.0165/0.8975 | 6.11% |
| 29.90 | 0.992 | 0.9380 | 0.0080 | 0.0620 | 13.6749/0.9429 | 12.9924/0.8958 | 4.99% |
| 29.90 | 0.994 | 0.9526 | 0.0060 | 0.0474 | 13.4836/0.9297 | 12.9683/0.8941 | 3.82% |
| 29.90 | 0.996 | 0.9678 | 0.0040 | 0.0322 | 13.2902/0.9163 | 12.9444/0.8925 | 2.60% |
| 29.90 | 0.998 | 0.9836 | 0.0020 | 0.0164 | 13.0946/0.9028 | 12.9205/0.8908 | 1.33% |
| 29.90 | 1.000 | 1.0000 | 0.0000 | 0.0000 | 12.8968/0.8892 | 12.8968/0.8892 | 0.00% |
| 40 | 0.000 | 0.0000 | 1.0000 | 1.0000 | 39.1175/2.6971 | 39.1175/2.6971 | 0.00% |
| 40 | 0.002 | 0.0046 | 0.9980 | 0.9954 | 39.2292/2.7048 | 39.1666/2.7004 | 0.16% |
| 40 | 0.100 | 0.1494 | 0.9000 | 0.8506 | 42.5267/2.932 | 41.5039/2.8616 | 2.41% |
| 40 | 0.200 | 0.2206 | 0.8000 | 0.7794 | 43.4682/2.9970 | 43.2932/2.9850 | 0.40% |
| 40 | 0.300 | 0.2640 | 0.7000 | 0.7360 | 43.4226/2.9939 | 42.8014/2.9511 | 1.43% |
| 40 | 0.324 | 0.2724 | 0.6760 | 0.7276 | 43.3303/2.9875 | 42.0535/2.8995 | 2.95% |
| 40 | 0.326 | 0.2731 | 0.6740 | 0.7269 | 43.3215/2.9869 | 41.9801/2.8944 | 3.10% |
| 40 | 0.348 | 0.2804 | 0.6520 | 0.7196 | 43.2138/2.9795 | 41.0773/2.8322 | 4.94% |
| 40 | 0.350 | 0.2811 | 0.6500 | 0.7189 | 43.2030/2.9787 | 40.9877/2.8260 | 5.13% |
| 40 | 0.990 | 0.9312 | 0.0100 | 0.0688 | 19.8257/1.3669 | 18.7456/1.2925 | 5.45% |
| 40 | 0.992 | 0.9440 | 0.0080 | 0.0560 | 19.5804/1.3500 | 18.7109/1.2901 | 4.44% |
| 40 | 0.994 | 0.9572 | 0.0060 | 0.0428 | 19.3326/1.3329 | 18.6763/1.2877 | 3.40% |
| 40 | 0.996 | 0.9710 | 0.0040 | 0.0290 | 19.0822/1.3157 | 18.6418/1.2853 | 2.31% |
| 40 | 0.998 | 0.9852 | 0.0020 | 0.0148 | 18.8290/1.2982 | 18.6075/1.2829 | 1.18% |
| 40 | 1.000 | 1.0000 | 0.0000 | 0.0000 | 18.5732/1.2806 | 18.5732/1.2806 | 0.00% |
| 60 | 0.000 | 0.0000 | 1.0000 | 1.0000 | 66.7508/4.6023 | 66.7508/4.6023 | 0.00% |
| 60 | 0.002 | 0.0048 | 0.9980 | 0.9952 | 66.9722/4.6176 | 66.8431/4.6087 | 0.19% |
| 60 | 0.050 | 0.0964 | 0.9500 | 0.9036 | 71.2049/4.9094 | 69.0695/4.7622 | 3.00% |
| 60 | 0.052 | 0.0994 | 0.9480 | 0.9006 | 71.3424/4.9189 | 69.1623/4.7686 | 3.06% |
| 60 | 0.100 | 0.1599 | 0.9000 | 0.8401 | 73.9384/5.0979 | 71.3675/4.9206 | 3.48% |
| 60 | 0.134 | 0.1919 | 0.8660 | 0.8081 | 75.1282/5.1799 | 72.8669/5.0240 | 3.01% |
| 60 | 0.136 | 0.1936 | 0.8640 | 0.8064 | 75.1851/5.1838 | 72.9523/5.0299 | 2.97% |
| 60 | 0.200 | 0.2385 | 0.8000 | 0.7615 | 76.4161/5.2687 | 75.3962/5.1984 | 1.33% |
| 60 | 0.300 | 0.2873 | 0.7000 | 0.7127 | 76.8076/5.2957 | 76.67965.2869 | 0.17% |
| 60 | 0.364 | 0.3117 | 0.6360 | 0.6883 | 76.4600/5.2717 | 74.2548/5.1197 | 2.88% |
| 60 | 0.366 | 0.3125 | 0.6340 | 0.6875 | 76.4433/5.2706 | 74.1332/5.1113 | 3.02% |
| 60 | 0.390 | 0.3209 | 0.6100 | 0.6791 | 76.2178/5.2550 | 72.5078/4.9992 | 4.87% |
| 60 | 0.392 | 0.3216 | 0.6080 | 0.6784 | 76.1969/5.2536 | 72.3602/4.9891 | 5.04% |
| 60 | 0.988 | 0.9319 | 0.0120 | 0.0681 | 37.8216/2.6077 | 35.8393/2.4710 | 5.24% |
| 60 | 0.990 | 0.9424 | 0.0100 | 0.0576 | 37.4342/2.5810 | 35.7723/2.4664 | 4.44% |
| 60 | 0.992 | 0.9532 | 0.0080 | 0.0468 | 37.0431/2.5540 | 35.7055/2.4618 | 3.61% |
| 60 | 0.994 | 0.9644 | 0.0060 | 0.0356 | 36.6482/2.5268 | 35.6390/2.4572 | 2.75% |
| 60 | 0.998 | 0.9878 | 0.0020 | 0.0122 | 35.8472/2.4716 | 35.5067/2.4481 | 0.95% |
| 60 | 1.000 | 1.0000 | 0.0000 | 0.0000 | 35.4409/2.4436 | 35.4409/2.4436 | 0.00% |
| 80 | 0.000 | 0.0000 | 1.0000 | 1.0000 | 106.7445/7.3598 | 106.7445/7.3598 | 0.00% |
| 80 | 0.002 | 0.0050 | 0.9980 | 0.9950 | 107.1575/7.3883 | 106.9093/7.3711 | 0.23% |
| 80 | 0.034 | 0.0737 | 0.9660 | 0.9263 | 112.9502/7.7876 | 109.5782/7.5552 | 2.99% |
| 80 | 0.036 | 0.0773 | 0.9640 | 0.9227 | 113.2653/7.8094 | 109.7468/7.5668 | 3.11% |
| 80 | 0.100 | 0.1694 | 0.9000 | 0.8306 | 121.0224/8.3442 | 115.2064/7.9432 | 4.81% |
| 80 | 0.192 | 0.2498 | 0.8080 | 0.7502 | 126.6249/8.7305 | 122.7885/8.4660 | 3.03% |
| 80 | 0.194 | 0.2511 | 0.8060 | 0.7489 | 126.6973/8.7355 | 122.9397/8.4764 | 2.97% |
| 80 | 0.200 | 0.2551 | 0.8000 | 0.7449 | 126.9045/8.7498 | 123.3872/8.5073 | 2.77% |
| 80 | 0.300 | 0.3092 | 0.7000 | 0.6908 | 128.6011/8.8667 | 128.4880/8.8589 | 0.09% |
| 80 | 0.404 | 0.3519 | 0.5960 | 0.6481 | 127.9126/8.8193 | 124.1362/8.5589 | 2.95% |
| 80 | 0.406 | 0.3526 | 0.5940 | 0.6474 | 127.8807/8.8171 | 123.9332/8.5449 | 3.09% |
| 80 | 0.430 | 0.3617 | 0.5700 | 0.6383 | 127.4454/8.7871 | 121.2404/8.3592 | 4.87% |
| 80 | 0.432 | 0.3624 | 0.5680 | 0.6376 | 127.4049/8.7843 | 120.9974/8.3425 | 5.03% |
| 80 | 0.986 | 0.9330 | 0.0140 | 0.0670 | 66.4262/4.5799 | 63.0507/4.3472 | 5.08% |
| 80 | 0.988 | 0.9418 | 0.0120 | 0.0582 | 65.8393/4.5395 | 62.9298/4.3389 | 4.42% |
| 80 | 0.992 | 0.9602 | 0.0080 | 0.0398 | 64.6508/4.4575 | 62.6893/4.3223 | 3.03% |
| 80 | 0.994 | 0.9698 | 0.0060 | 0.0302 | 64.0491/4.4160 | 62.5698/4.3140 | 2.31% |
| 80 | 0.998 | 0.9896 | 0.0020 | 0.0104 | 62.8306/4.3320 | 62.3319/4.2976 | 0.79% |
| 80 | 1.000 | 1.0000 | 0.0000 | 0.0000 | 62.2136/4.2895 | 62.2136/4.2895 | 0.00% |
| 100 | 0.000 | 0.0000 | 1.0000 | 1.0000 | 162.0606/11.1737 | 162.0606/11.1737 | 0.00% |
| 100 | 0.002 | 0.0052 | 0.9980 | 0.9948 | 162.8079/11.2252 | 162.3479/11.1935 | 0.28% |
| 100 | 0.024 | 0.0565 | 0.9760 | 0.9435 | 170.4614/11.7529 | 165.5563/11.4147 | 2.88% |
| 100 | 0.026 | 0.0607 | 0.9740 | 0.9393 | 171.1079/11.7975 | 165.8523/11.4351 | 3.07% |
| 100 | 0.050 | 0.1062 | 0.9500 | 0.8938 | 178.2764/12.2917 | 169.4602/11.6839 | 4.95% |
| 100 | 0.052 | 0.1096 | 0.9480 | 0.8904 | 178.8269/12.3297 | 169.7653/11.7049 | 5.07% |
| 100 | 0.100 | 0.1787 | 0.9000 | 0.8213 | 190.1334/13.1092 | 177.2807/12.2231 | 6.76% |
| 100 | 0.200 | 0.2722 | 0.8000 | 0.7278 | 204.4969/14.0996 | 193.6178/13.3495 | 5.32% |
| 100 | 0.208 | 0.2779 | 0.7920 | 0.7221 | 205.2348/14.1504 | 194.9091/13.4385 | 5.03% |
| 100 | 0.210 | 0.2793 | 0.7900 | 0.7207 | 205.4114/14.1626 | 195.2300/13.4606 | 4.96% |
| 100 | 0.256 | 0.3084 | 0.7440 | 0.6916 | 208.6711/14.3874 | 202.2679/13.9459 | 3.07% |
| 100 | 0.258 | 0.3096 | 0.7420 | 0.6904 | 208.7805/14.3949 | 202.5525/13.9655 | 2.98% |
| 100 | 0.300 | 0.3324 | 0.7000 | 0.6676 | 210.5275/14.5154 | 207.8247/14.3290 | 1.28% |
| 100 | 0.400 | 0.3780 | 0.6000 | 0.6220 | 211.0931/14.5544 | 209.6264/14.4532 | 0.69% |
| 100 | 0.440 | 0.3945 | 0.5600 | 0.6055 | 210.1069/14.4864 | 203.9804/14.0640 | 2.92% |
| 100 | 0.442 | 0.3953 | 0.5580 | 0.6047 | 210.0407/14.4818 | 203.6103/14.0384 | 3.06% |
| 100 | 0.984 | 0.9342 | 0.0160 | 0.0658 | 109.3571/7.5399 | 103.8668/7.1614 | 5.02% |
| 100 | 0.986 | 0.9417 | 0.0140 | 0.0583 | 108.4855/7.4798 | 103.6575/7.1469 | 4.45% |
| 100 | 0.990 | 0.9574 | 0.0100 | 0.0426 | 106.7243/7.3584 | 103.2415/7.1183 | 3.26% |
| 100 | 0.992 | 0.9656 | 0.0080 | 0.0344 | 105.8347/7.2970 | 103.0346/7.1040 | 2.65% |
| 100 | 0.998 | 0.9911 | 0.0020 | 0.0089 | 103.1293/7.1105 | 102.4189/7.0615 | 0.69% |
| 100 | 1.000 | 1.0000 | 0.0000 | 0.0000 | 102.2152/7.0475 | 102.2152/7.0475 | 0.00% |
| 120 | 0.000 | 0.0000 | 1.0000 | 1.0000 | 236.1168/16.2797 | 236.1168/16.2797 | 0.00% |
| 120 | 0.002 | 0.0054 | 0.9980 | 0.9946 | 237.4794/16.3736 | 236.6231/16.3146 | 0.36% |
| 120 | 0.018 | 0.0451 | 0.9820 | 0.9549 | 248.1231/17.1075 | 240.7570/16.5996 | 2.97% |
| 120 | 0.020 | 0.0497 | 0.9800 | 0.9503 | 249.4243/17.1972 | 241.2844/16.6360 | 3.26% |
| 120 | 0.032 | 0.0760 | 0.9680 | 0.9240 | 257.1173/17.7276 | 244.4997/16.8577 | 4.91% |
| 120 | 0.034 | 0.0801 | 0.9660 | 0.9199 | 258.3829/17.8149 | 245.0444/16.8952 | 5.16% |
| 120 | 0.100 | 0.1903 | 0.9000 | 0.8097 | 290.9384/20.0595 | 264.6514/18.2471 | 9.04% |
| 120 | 0.160 | 0.2557 | 0.8400 | 0.7443 | 300.5716/20.7237 | 285.3887/19.6769 | 5.05% |
| 120 | 0.162 | 0.2575 | 0.8380 | 0.7425 | 300.8051/20.7398 | 285.8125/19.7061 | 4.98% |
| 120 | 0.200 | 0.2891 | 0.8000 | 0.7109 | 304.4655/20.9922 | 292.5199/20.1685 | 3.92% |
| 120 | 0.232 | 0.3118 | 0.7680 | 0.6882 | 306.5936/21.1389 | 297.3575/20.5021 | 3.01% |
| 120 | 0.234 | 0.3131 | 0.7660 | 0.6869 | 306.7023/21.1464 | 297.6413/20.5217 | 2.95% |
| 120 | 0.300 | 0.3523 | 0.7000 | 0.6477 | 308.9822/21.3036 | 305.5498/21.0669 | 1.11% |
| 120 | 0.400 | 0.4009 | 0.6000 | 0.5991 | 308.7450/21.2872 | 308.7833/21.2899 | -0.01% |
| 120 | 0.500 | 0.4448 | 0.5000 | 0.5552 | 305.0445/21.0321 | 295.9952/20.4082 | 2.97% |
| 120 | 0.502 | 0.4457 | 0.4980 | 0.5543 | 304.9360/21.0246 | 295.5923/20.3804 | 3.06% |
| 120 | 0.538 | 0.4618 | 0.4620 | 0.5382 | 302.7328/20.8727 | 287.6782/19.8347 | 4.97% |
| 120 | 0.540 | 0.4627 | 0.4600 | 0.5373 | 302.5961/20.8633 | 287.2072/19.8022 | 5.09% |
| 120 | 0.982 | 0.9354 | 0.0180 | 0.0646 | 171.3352/11.8132 | 162.5178/11.2052 | 5.15% |
| 120 | 0.984 | 0.9420 | 0.0160 | 0.0580 | 170.0262/11.7229 | 162.1598/11.1805 | 4.63% |
| 120 | 0.988 | 0.9556 | 0.0120 | 0.0444 | 167.3917/11.5413 | 161.4485/11.1315 | 3.55% |
| 120 | 0.990 | 0.9627 | 0.0100 | 0.0373 | 166.0660/11.4499 | 161.0952/11.1071 | 2.99% |
| 120 | 0.998 | 0.9922 | 0.0020 | 0.0078 | 160.7064/11.0803 | 159.6975/11.0108 | 0.63% |
| 120 | 1.000 | 1.0000 | 0.0000 | 0.0000 | 159.3520/10.9869 | 159.3520/10.9869 | 0.00% |

Near-azeotropes formed between Z-HFO-1336mzz and neopentane at 1 atm (1.013 bar) are shown in Table 11. Table 11 shows representative data in increments of 0.10 Z-HFO-1336mzz liquid molar composition, or the boundaries of near-azeotropic behavior.

**Table 11.**

| **Pressure (atm)** | **Temp (°C)** | **Liquid Mole Fraction Z-HFO-1336mzz** | **Vapor Mole Fraction Z-HFO-1336mzz** | **Liquid Mole Fraction Neopentane** | **Vapor Mole Fraction Neopentane** | **Bubble Point Pressure (psia)** | **Dew Point Pressure (psia/bar)** | **[(BP-DP)/BP]* 100%** |
|---|---|---|---|---|---|---|---|---|
| 1.00* | 9.5 | 0.0000 | 0.0000 | 1.0000 | 1.0000 | 14.6960** | 14.6960/1.0133 | 0.00% |
| 1.00* | 9.4 | 0.0020 | 0.0041 | 0.9980 | 0.9959 | 14.6960** | 14.6793/1.0121 | 0.11% |
| 1.00* | 7.8 | 0.2540 | 0.2075 | 0.7460 | 0.7925 | 14.6960** | 14.2731/0.9841 | 2.88% |
| 1.00* | 7.8 | 0.2560 | 0.2082 | 0.7440 | 0.7918 | 14.6960** | 14.2473/0.9823 | 3.05% |
| 1.00* | 7.9 | 0.2740 | 0.2139 | 0.7260 | 0.7861 | 14.6960** | 13.9822/0.9640 | 4.86% |
| 1.00* | 7.9 | 0.2760 | 0.2145 | 0.7240 | 0.7855 | 14.6960** | 13.9495/0.9618 | 5.08% |
| 1.00* | 31.5 | 0.9900 | 0.9252 | 0.0100 | 0.0748 | 14.6960** | 13.8141/0.9524 | 6.00% |
| 1.00* | 31.9 | 0.9920 | 0.9393 | 0.0080 | 0.0607 | 14.6960** | 13.9794/0.9638 | 4.88% |
| 1.00* | 32.2 | 0.9940 | 0.9538 | 0.0060 | 0.0462 | 14.6960** | 14.1500/0.9756 | 3.72% |
| 1.00* | 32.6 | 0.9960 | 0.9687 | 0.0040 | 0.0313 | 14.6960** | 14.3261/0.9878 | 2.52% |
| 1.00* | 33.0 | 0.9980 | 0.9841 | 0.0020 | 0.0159 | 14.6960** | 14.5080/1.0003 | 1.28% |
| 1.00* | 33.4 | 1.0000 | 1.0000 | 0.0000 | 0.0000 | 14.6960** | 14.6960/1.0133 | 0.00% |

| | | | | | | | | |
|---|---|---|---|---|---|---|---|---|
| * 1.013 bar ** 1.0133 bar | | | | | | | | |

The data in Table 10-11 are broadly summarized in Table 12 which shows azeotrope-like compositions, based on the equation [(BP-VP)BP] x 100 ≤ 3.

**Table 12.**

| **Components** | **Temp (°C)** | **Liquid Mole Percentage Range Z-HFO-1336mzz (Remainder Neopentane)** |
|---|---|---|
| Z-HFO-1336mzz / Neopentane | -40 | 0.002 to 0.148 |
| Z-HFO-1336mzz / Neopentane | -20 | 0.002 to 0.192 |
| Z-HFO-1336mzz / Neopentane | 0 | 0.002 to 0.238 |
| Z-HFO-1336mzz / Neopentane | 20 | 0.002 to 0.382 and 0.996 to 0.998 |
| Z-HFO-1336mzz / Neopentane | 29.90 | 0.002 to 0.302 and 0.996 to 0.998 |
| Z-HFO-1336mzz / Neopentane | 40 | 0.002 to 0.324 and 0.996 to 0.998 |
| Z-HFO-1336mzz / Neopentane | 60 | 0.002 to 0.050 and 0.136 to 0.364 and 0.994 to 0.998 |
| Z-HFO-1336mzz / Neopentane | 80 | 0.002 to 0.034 and 0.194 to 0.404 and 0.994 to 0.998 |
| Z-HFO-1336mzz / Neopentane | 100 | 0.002 to 0.024 and 0.258 to 0.440 and 0.992 to 0.998 |
| Z-HFO-1336mzz / Neopentane | 120 | 0.002 to 0.018 and 0.234 to 0.050 and 0.990 to 0.998 |

## Claims

1. A composition, comprising:
i) neopentane; and
ii) a compound selected from E-1,1,1,4,4,4-hexafluoro-2-butene and Z-1,1,1,4,4,4-hexafluoro-2-butene,
wherein the E-1,1,1,4,4,4-hexafluoro-2-butene or Z-1,1,1,4,4,4-hexafluoro-2-butene is present in the composition in an amount effective to form an azeotrope composition or an azeotrope-like composition with the neopentane.

2. The composition of claim 1, wherein the composition comprises neopentane and E-1,1,1,4,4,4-hexafluoro-2-butene, wherein the E-1,1,1,4,4,4-hexafluoro-2-butene is present in the composition in an amount effective to form an azeotrope composition or an azeotrope-like composition with the neopentane.

3. The composition of claim 2, wherein the composition comprises from 40 to 60 mol% neopentane and 60 to 40 mol% E-1,1,1,4,4,4-hexafluoro-2-butene, which preferably has a boiling point of from -40°C to 120°C at a pressure of from 2 psi to 390 psi (0.138 bar to 26.890 bar) and which more preferably is an azeotrope composition.

4. The composition of claim 2, wherein the composition comprises from 40 to 50 mol% neopentane and 60 to 50 mol% E-1,1,1,4,4,4-hexafluoro-2-butene, which preferably has a boiling point of from 0.9°C to 128°C at a pressure of from 1 atm to 30 atm (1.013 bar to 30.398 bar) and which more preferably is an azeotrope composition.

5. The composition of claim 2, wherein the composition comprises from 98.4 to 99.8 mol% neopentane and 1.6 to 0.2 mol% E-1,1,1,4,4,4-hexafluoro-2-butene, which preferably has a boiling point of from 8.3°C to 9.3°C at a pressure of 1 atm (1.013 bar) and which more preferably is an azeotrope-like composition.

6. The composition of claim 2, wherein the composition comprises from 38.4 to 62.6 mol% neopentane and 65.2 to 37.4 mol% E-1,1,1,4,4,4-hexafluoro-2-butene, which preferably has a boiling point of from 0.9°C to 1.2°C at a pressure of 1 atm (1.013 bar) and which more preferably is an azeotrope-like composition.

7. The composition of claim 2, wherein the composition comprises from 0.2 to 2.8 mol% neopentane and 99.8 to 97.2 mol% E-1,1,1,4,4,4-hexafluoro-2-butene, which preferably has a boiling point of from 6.3°C to 7.4°C at a pressure of 1 atm (1.013 bar) and which more preferably is an azeotrope-like composition.

8. The composition of claim 2, wherein the composition comprises:
from 99.8 to 98.2 mol% neopentane and 0.2 to 1.8 mol% E-1,1,1,4,4,4-hexafluoro-2-butene; or
from 71.6 to 47.6 mol% neopentane and 28.4 to 52.4 mol% E-1,1,1,4,4,4-hexafluoro-2-butene; or
from 1.2 to 0.2 mol% neopentane and 98.8 to 99.8 mol% E-1,1,1,4,4,4-hexafluoro-2-butene; or
from 99.8 to 98.4 mol% neopentane and 0.2 to 1.6 mol% E-1,1,1,4,4,4-hexafluoro-2-butene; or
from 66.6 to 40.8 mol% neopentane and 33.4 to 59.2 mol% E-1,1,1,4,4,4-hexafluoro-2-butene; or
from 1.8 to 0.2 mol% neopentane and 98.2 to 99.8 mol% E-1,1,1,4,4,4-hexafluoro-2-butene; or
from 62.8 to 35.2 mol% neopentane and 37.2 to 64.8 mol% E-1,1,1,4,4,4-hexafluoro-2-butene; or
from 2.6 to 0.2 mol% neopentane and 97.4 to 99.8 mol% E-1,1,1,4,4,4-hexafluoro-2-butene; or
from 59.8 to 30.2 mol% neopentane and 40.2 to 69.8 mol% E-1,1,1,4,4,4-hexafluoro-2-butene; or
from 3.4 to 0.2 mol% neopentane and 96.6 to 99.8 mol% E-1,1,1,4,4,4-hexafluoro-2-butene; or
from 58.4 to 28.2 mol% neopentane and 41.6 to 71.8 mol% E-1,1,1,4,4,4-hexafluoro-2-butene; or
from 3.8 to 0.2 mol% neopentane and 96.2 to 99.8 mol% E-1,1,1,4,4,4-hexafluoro-2-butene; or
from 57.2 to 26.4 mol% neopentane and 42.8 to 73.6 mol% E-1,1,1,4,4,4-hexafluoro-2-butene; or
from 4.4 to 0.2 mol% neopentane and 95.6 to 99.8 mol% E-1,1,1,4,4,4-hexafluoro-2-butene; or
from 55.4 to 23.6 mol% neopentane and 44.6 to 76.4 mol% E-1,1,1,4,4,4-hexafluoro-2-butene; or
from 5.2 to 99.1 mol% neopentane and 94.8 to 0.9 mol% E-1,1,1,4,4,4-hexafluoro-2-butene; or
from 99.8 to 98.6 mol% neopentane and 0.2 to 1.4 mol% E-1,1,1,4,4,4-hexafluoro-2-butene; or
from 53.8 to 23.2 mol% neopentane and 46.2 to 76.8 mol% E-1,1,1,4,4,4-hexafluoro-2-butene; or
from 5.4 to 0.2 mol% neopentane and 94.6 to 99.8 mol% E-1,1,1,4,4,4-hexafluoro-2-butene; or
from 56 to 24.4 mol% neopentane and 44.0 to 75.6 mol% E-1,1,1,4,4,4-hexafluoro-2-butene; or
from 4.6 to 0.2 mol% neopentane and 95.4 to 99.8 mol% E-1,1,1,4,4,4-hexafluoro-2-butene; or
from 57.2 to 3.8 mol% neopentane and 42.8 to 96.2 mol% E-1,1,1,4,4,4-hexafluoro-2-butene; or
from 2.6 to 0.2 mol% neopentane and 97.4 to 99.8 mol% E-1,1,1,4,4,4-hexafluoro-2-butene, which preferably has a boiling point of from -20°C to 120°C at a pressure of 1 atm (1.013 bar) and which more preferably is an azeotrope-like composition.

9. The composition of claim 1, wherein the composition comprises neopentane and Z-1,1,1,4,4,4-hexafluoro-2-butene, wherein the Z-1,1,1,4,4,4-hexafluoro-2-butene is present in the composition in an amount effective to form an azeotrope composition or an azeotrope-like composition with the neopentane.

10. The composition of claim 9, wherein the composition comprises from 60 to 93 mol% neopentane and 40 to 7 mol% Z-1,1,1,4,4,4-hexafluoro-2-butene, which preferably has a boiling point of from -40°C to 120°C at a pressure of from 1.5 psi to 310 psi (0.103 bar to 21.374 bar) and which more preferably is an azeotrope composition.

11. The composition of claim 9, wherein the composition comprises from 56 to 83 mol% neopentane and 44 to 17 mol% Z-1,1,1,4,4,4-hexafluoro-2-butene, which preferably has a boiling point of from 5°C to 145°C at a pressure of from 1 atm to 30 atm (1.013 bar to 30.398 bar) and which more preferably is an azeotrope composition.

12. The composition of claim 9, wherein the composition comprises from 99.6 to 79.2 mol% neopentane and 0.4 to 20.8 mol% Z-1,1,1,4,4,4-hexafluoro-2-butene, which preferably has a boiling point of from 7.8°C to 9.4°C at a pressure of 1 atm (1.013 bar) and which more preferably is an azeotrope-like composition.

13. The composition of claim 9, wherein the composition comprises from 3.2 to 1.6 mol% neopentane and 96.8 to 98.4 mol% Z-1,1,1,4,4,4-hexafluoro-2-butene, which preferably has a boiling point of from 32.6°C to 33.0°C at a pressure of 1 atm (1.013 bar) and which more preferably is an azeotrope-like composition.

14. The composition of claim 9, wherein the composition comprises:
from 99.8 to 85.2 mol% neopentane and 0.2 to 14.8 mol% Z-1,1,1,4,4,4-hexafluoro-2-butene; or
from 99.8 to 80.8 mol% neopentane and 0.2 to 19.2 mol% Z-1,1,1,4,4,4-hexafluoro-2-butene; or
from 99.8 to 76.2 mol% neopentane and 0.2 to 23.8 mol% Z-1,1,1,4,4,4-hexafluoro-2-butene; or
from 99.8 to 61.8 mol% neopentane and 0.2 to 38.2 mol% Z-1,1,1,4,4,4-hexafluoro-2-butene; or
from 0.4 to 0.2 mol% neopentane and 99.6 to 99.8 mol% Z-1,1,1,4,4,4-hexafluoro-2-butene; or
from 99.8 to 69.8 mol% neopentane and 0.2 to 30.2 mol% Z-1,1,1,4,4,4-hexafluoro-2-butene; or
from 99.8 to 67.6 mol% neopentane and 0.2 to 32.4 mol% Z-1,1,1,4,4,4-hexafluoro-2-butene; or
from 99.8 to 95.0 mol% neopentane and 0.2 to 5 mol% Z-1,1,1,4,4,4-hexafluoro-2-butene; or
from 86.4 to 63.6 mol% neopentane and 13.6 to 36.4 mol% Z-1,1,1,4,4,4-hexafluoro-2-butene; or
from 0.4 to 0.2 mol% neopentane and 99.6 to 99.8 mol% Z-1,1,1,4,4,4-hexafluoro-2-butene; or
from 99.8 to 96.6 mol% neopentane and 0.2 to 3.4 mol% Z-1,1,1,4,4,4-hexafluoro-2-butene; or
from 80.6 to 59.6 mol% neopentane and 19.4 to 40.4 mol% Z-1,1,1,4,4,4-hexafluoro-2-butene; or
from 99.8 to 97.6 mol% neopentane and 0.2 to 2.4 mol% Z-1,1,1,4,4,4-hexafluoro-2-butene; or
from 74.2 to 56.0 mol% neopentane and 25.8 to 44.0 mol% Z-1,1,1,4,4,4-hexafluoro-2-butene; or
from 0.2 to 0.8 mol% neopentane and 99.2 to 99.8 mol% Z-1,1,1,4,4,4-hexafluoro-2-butene; or
from 99.8 to 98.2 mol% neopentane and 0.2 to 1.8 mol% Z-1,1,1,4,4,4-hexafluoro-2-butene; or
from 76.6 to 50.0 mol% neopentane and 23.4 to 50.0 mol% Z-1,1,1,4,4,4-hexafluoro-2-butene; or
from 1.0 to 0.2 mol% neopentane and 99.0 to 99.8 mol% Z-1,1,1,4,4,4-hexafluoro-2-butene.

15. The composition of claim 14, which has a boiling point of from -20°C to 120°C at a pressure of 1 atm (1.013 bar) and which preferably is an azeotrope-like composition.

## Patentansprüche

1. Zusammensetzung, umfassend:
i) Neopentan; und
ii) eine Verbindung, ausgewählt aus E-1,1,1,4,4,4-Hexafluor-2-buten und Z-1,1,14,4,4-Hexafluor-2-buten,
wobei E-1,1,1,4,4,4-Hexafluor-2-buten oder Z-1,1,1,4,4,4-Hexafluor-2-buten in der Zusammensetzung in einer Menge vorhanden ist, die wirksam ist, um mit dem Neopentan eine azeotrope Zusammensetzung oder eine azeotropähnliche Zusammensetzung zu bilden.

2. Zusammensetzung nach Anspruch 1, wobei die Zusammensetzung Neopentan und E-1,1,1,4,4,4-Hexafluor-2-buten umfasst, wobei das E-1,1,1,4,4,4-Hexafluor-2-buten in der Zusammensetzung in einer Menge vorhanden ist, die wirksam ist, um mit dem Neopentan eine azeotrope Zusammensetzung oder eine azeotropähnliche Zusammensetzung zu bilden.

3. Zusammensetzung nach Anspruch 2, wobei die Zusammensetzung 40 bis 60 Mol-% Neopentan und 60 bis 40 Mol-% E-1,1,1,4,4,4-Hexafluor-2-buten umfasst, das bevorzugt einen Siedepunkt von -40 °C bis 120 °C bei einem Druck von 2 psi bis 390 psi (0,138 bar bis 26,890 bar) aufweist und bevorzugter eine azeotrope Zusammensetzung ist.

4. Zusammensetzung nach Anspruch 2, wobei die Zusammensetzung 40 bis 50 Mol-% Neopentan und 60 bis 50 Mol-% E-1,1,1,4,4,4-Hexafluor-2-buten umfasst, das bevorzugt einen Siedepunkt von 0,9 °C bis 128 °C bei einem Druck von 1 atm bis 30 atm (1,013 bar bis 30,398 bar) aufweist und bevorzugter eine azeotrope Zusammensetzung ist.

5. Zusammensetzung nach Anspruch 2, wobei die Zusammensetzung 98,4 bis 99,8 Mol-% Neopentan und 1,6 bis 0,2 Mol-% E-1,1,1,4,4,4-Hexafluor-2-buten umfasst, das bevorzugt einen Siedepunkt von 8,3 °C bis 9,3 °C bei einem Druck von 1 atm (1,013 bar) aufweist und bevorzugter eine azeotropähnliche Zusammensetzung ist.

6. Zusammensetzung nach Anspruch 2, wobei die Zusammensetzung 38,4 bis 62,6 Mol-% Neopentan und 65,2 bis 37,4 Mol-% E-1,1,1,4,4,4-Hexafluor-2-buten umfasst, das bevorzugt einen Siedepunkt von 0,9 °C bis 1,2 °C bei einem Druck von 1 atm (1,013 bar) aufweist und bevorzugter eine azeotropähnliche Zusammensetzung ist.

7. Zusammensetzung nach Anspruch 2, wobei die Zusammensetzung 0,2 bis 2,8 Mol-% Neopentan und 99,8 bis 97,2 Mol-% E-1,1,1,4,4,4-Hexafluor-2-buten umfasst, das bevorzugt einen Siedepunkt von 6,3 °C bis 7,4 °C bei einem Druck von 1 atm (1,013 bar) aufweist und bevorzugter eine azeotropähnliche Zusammensetzung ist.

8. Zusammensetzung nach Anspruch 2, wobei die Zusammensetzung Folgendes umfasst:
von 99,8 bis 98,2 Mol-% Neopentan und 0,2 bis 1,8 Mol-% E-1,1,1,4,4,4-Hexafluor-2-buten; oder
von 71,6 bis 47,6 Mol-% Neopentan und 28,4 bis 52,4 Mol-% E-1,1,1,4,4,4-Hexafluor-2-buten; oder
von 1,2 bis 0,2 Mol-% Neopentan und 98,8 bis 99,8 Mol-% E-1,1,1,4,4,4-Hexafluor-2-buten; oder
von 99,8 bis 98,4 Mol-% Neopentan und 0,2 bis 1,6 Mol-% E-1,1,1,4,4,4-Hexafluor-2-buten; oder
von 66,6 bis 40,8 Mol-% Neopentan und 33,4 bis 59,2 Mol-% E-1,1,1,4,4,4-Hexafluor-2-buten; oder
von 1,8 bis 0,2 Mol-% Neopentan und 98,2 bis 99,8 Mol-% E-1,1,1,4,4,4-Hexafluor-2-buten; oder
von 62,8 bis 35,2 Mol-% Neopentan und 37,2 bis 64,8 Mol-% E-1,1,1,4,4,4-Hexafluor-2-buten; oder
von 2,6 bis 0,2 Mol-% Neopentan und 97,4 bis 99,8 Mol-% E-1,1,1,4,4,4-Hexafluor-2-buten; oder
von 59,8 bis 30,2 Mol-% Neopentan und 40,2 bis 69,8 Mol-% E-1,1,1,4,4,4-Hexafluor-2-buten; oder
von 3,4 bis 0,2 Mol-% Neopentan und 96,6 bis 99,8 Mol-% E-1,1,1,4,4,4-Hexafluor-2-buten; oder
von 58,4 bis 28,2 Mol-% Neopentan und 41,6 bis 71,8 Mol-% E-1,1,1,4,4,4-Hexafluor-2-buten; oder
von 3,8 bis 0,2 Mol-% Neopentan und 96,2 bis 99,8 Mol-% E-1,1,1,4,4,4-Hexafluor-2-buten; oder
von 57,2 bis 26,4 Mol-% Neopentan und 42,8 bis 73,6 Mol-% E-1,1,1,4,4,4-Hexafluor-2-buten; oder
von 4,4 bis 0,2 Mol-% Neopentan und 95,6 bis 99,8 Mol-% E-1,1,1,4,4,4-Hexafluor-2-buten; oder
von 55,4 bis 23,6 Mol-% Neopentan und 44,6 bis 76,4 Mol-% E-1,1,1,4,4,4-Hexafluor-2-buten; oder
von 5,2 bis 99,1 Mol-% Neopentan und 94,8 bis 0,9 Mol-% E-1,1,1,4,4,4-Hexafluor-2-buten; oder
von 99,8 bis 98,6 Mol-% Neopentan und 0,2 bis 1,4 Mol-% E-1,1,1,4,4,4-Hexafluor-2-buten; oder
von 53,8 bis 23,2 Mol-% Neopentan und 46,2 bis 76,8 Mol-% E-1,1,1,4,4,4-Hexafluor-2-buten; oder
von 5,4 bis 0,2 Mol-% Neopentan und 94,6 bis 99,8 Mol-% E-1,1,1,4,4,4-Hexafluor-2-buten; oder
von 56 bis 24,4 Mol-% Neopentan und 44,0 bis 75,6 Mol-% E-1,1,1,4,4,4-Hexafluor-2-buten; oder
von 4,6 bis 0,2 Mol-% Neopentan und 95,4 bis 99,8 Mol-% E-1,1,1,4,4,4-Hexafluor-2-buten; oder
von 57,2 bis 3,8 Mol-% Neopentan und 42,8 bis 96,2 Mol-% E-1,1,1,4,4,4-Hexafluor-2-buten; oder
von 2,6 bis 0,2 Mol-% Neopentan und 97,4 bis 99,8 Mol-% E-1,1,1,4,4,4-Hexafluor-2-buten, das bevorzugt einen Siedepunkt von -20 °C bis 120 °C bei einem Druck von 1 atm (1,013 bar) aufweist und bevorzugter eine azeotropähnliche Zusammensetzung ist.

9. Zusammensetzung nach Anspruch 1, wobei die Zusammensetzung Neopentan und Z-1,1,1,4,4,4-Hexafluor-2-buten umfasst, wobei das Z-111,1,4,4,4-Hexafluor-2-buten in der Zusammensetzung in einer Menge vorhanden ist, die wirksam ist, um mit dem Neopentan eine azeotrope Zusammensetzung oder eine azeotropähnliche Zusammensetzung zu bilden.

10. Zusammensetzung nach Anspruch 9, wobei die Zusammensetzung 60 bis 93 Mol-% Neopentan und 40 bis 7 Mol-% Z-1,1,1,4,4,4-Hexafluor-2-buten umfasst, das bevorzugt einen Siedepunkt von -40 °C bis 120 °C bei einem Druck von 1,5 psi bis 310 psi (0,103 bar bis 21,374 bar) aufweist und bevorzugter eine azeotrope Zusammensetzung ist.

11. Zusammensetzung nach Anspruch 9, wobei die Zusammensetzung 56 bis 83 Mol-% Neopentan und 44 bis 17 Mol-% Z-1,1,1,4,4,4-Hexafluor-2-buten umfasst, das bevorzugt einen Siedepunkt von 5 °C bis 145 °C bei einem Druck von 1 atm bis 30 atm (1,013 bar bis 30,398 bar) aufweist und bevorzugter eine azeotrope Zusammensetzung ist.

12. Zusammensetzung nach Anspruch 9, wobei die Zusammensetzung 99,6 bis 79,2 Mol-% Neopentan und 0,4 bis 20,8 Mol-% Z-1,1,1,4,4,4-Hexafluor-2-buten umfasst, das bevorzugt einen Siedepunkt von 7,8 °C bis 9,4 °C bei einem Druck von 1 atm (1,013 bar) aufweist und bevorzugter eine azeotropähnliche Zusammensetzung ist.

13. Zusammensetzung nach Anspruch 9, wobei die Zusammensetzung 3,2 bis 1,6 Mol-% Neopentan und 96,8 bis 98,4 Mol-% Z-1,1,1,4,4,4-Hexafluor-2-buten umfasst, das bevorzugt einen Siedepunkt von 32,6 °C bis 33,0 °C bei einem Druck von 1 atm (1,013 bar) aufweist und bevorzugter eine azeotropähnliche Zusammensetzung ist.

14. Zusammensetzung nach Anspruch 9, wobei die Zusammensetzung Folgendes umfasst:
von 99,8 bis 85,2 Mol-% Neopentan und 0,2 bis 14,8 Mol-% Z-1,1,1,4,4,4-Hexafluor-2-buten; oder
von 99,8 bis 80,8 Mol-% Neopentan und 0,2 bis 19,2 Mol-% Z-1,1,1,4,4,4-Hexafluor-2-buten; oder
von 99,8 bis 76,2 Mol-% Neopentan und 0,2 bis 23,8 Mol-% Z-1,1,1,4,4,4-Hexafluor-2-buten; oder
von 99,8 bis 61,8 Mol-% Neopentan und 0,2 bis 38,2 Mol-% Z-1,1,1,4,4,4-Hexafluor-2-buten; oder
von 0,4 bis 0,2 Mol-% Neopentan und 99,6 bis 99,8 Mol-% Z-1,1,1,4,4,4-Hexafluor-2-buten; oder
von 99,8 bis 69,8 Mol-% Neopentan und 0,2 bis 30,2 Mol-% Z-1,1,1,4,4,4-Hexafluor-2-buten; oder
von 99,8 bis 67,6 Mol-% Neopentan und 0,2 bis 32,4 Mol-% Z-1,1,1,4,4,4-Hexafluor-2-buten; oder
von 99,8 bis 95,0 Mol-% Neopentan und 0,2 bis 5 Mol-% Z-1,1,1,4,4,4-Hexafluor-2-buten; oder von 86,4 bis 63,6 Mol-% Neopentan und 13,6 bis 36,4 Mol-% Z-1,1,1,4,4,4-Hexafluor-2-buten; oder
von 0,4 bis 0,2 Mol-% Neopentan und 99,6 bis 99,8 Mol-% Z-1,1,1,4,4,4-Hexafluor-2-buten; oder
von 99,8 bis 96,6 Mol-% Neopentan und 0,2 bis 3,4 Mol-% Z-1,1,1,4,4,4-Hexafluor-2-buten; oder
von 80,6 bis 59,6 Mol-% Neopentan und 19,4 bis 40,4 Mol-% Z-1,1,1,4,4,4-Hexafluor-2-buten; oder
von 99,8 bis 97,6 Mol-% Neopentan und 0,2 bis 2,4 Mol-% Z-1,1,1,4,4,4-Hexafluor-2-buten; oder
von 74,2 bis 56,0 Mol-% Neopentan und 25,8 bis 44,0 Mol-% Z-1,1,1,4,4,4-Hexafluor-2-buten; oder
von 0,2 bis 0,8 Mol-% Neopentan und 99,2 bis 99,8 Mol-% Z-1,1,1,4,4,4-Hexafluor-2-buten; oder
von 99,8 bis 98,2 Mol-% Neopentan und 0,2 bis 1,8 Mol-% Z-1,1,1,4,4,4-Hexafluor-2-buten; oder
von 76,6 bis 50,0 Mol-% Neopentan und 23,4 bis 50,0 Mol-% Z-1,1,1,4,4,4-Hexafluor-2-buten; oder
von 1,0 bis 0,2 Mol-% Neopentan und 99,0 bis 99,8 Mol-% Z-1,1,1,4,4,4-Hexafluor-2-buten.

15. Zusammensetzung nach Anspruch 14, die einen Siedepunkt von -20 °C bis 120 °C bei einem Druck von 1 atm (1,013 bar) aufweist und bevorzugt eine azeotropähnliche Zusammensetzung ist.

## Revendications

1. Composition, comprenant :
i) du néopentane ; et
ii) un composé choisi parmi le E-1,1,1,4,4,4-hexafluoro-2-butène et le Z-1,1,1,4,4,4-hexafluoro-2-butène,
dans laquelle le E-1,1,1,4,4,4-hexafluoro-2-butène ou le Z-1,1,1,4,4,4-hexafluoro-2-butène est présent dans la composition en une quantité efficace pour former une composition azéotrope ou une composition de type azéotrope avec le néopentane.

2. Composition selon la revendication 1, dans laquelle la composition comprend du néopentane et du E-1,1,1,4,4,4-hexafluoro-2-butène, dans laquelle le E-1,1,1,4,4,4-hexafluoro-2-butène est présent dans la composition en une quantité efficace pour former une composition azéotrope ou une composition de type azéotrope avec le néopentane.

3. Composition selon la revendication 2, dans laquelle la composition comprend de 40 à 60 % en moles de néopentane et de 60 à 40 % en moles de E-1,1,1,4,4,4-hexafluoro-2-butène, qui présente de préférence un point d'ébullition de -40 °C à 120 °C à une pression de 2 psi à 390 psi (0,138 bar à 26,890 bar) et qui est plus préférentiellement une composition azéotrope.

4. Composition selon la revendication 2, dans laquelle la composition comprend de 40 à 50 % en moles de néopentane et de 60 à 50 % en moles de E-1,1,1,4,4,4-hexafluoro-2-butène, qui présente de préférence un point d'ébullition de 0,9 °C à 128 °C à une pression de 1 atm à 30 atm (1,013 bar à 30,398 bar) et qui est plus préférentiellement une composition azéotrope.

5. Composition selon la revendication 2, dans laquelle la composition comprend de 98,4 à 99,8 % en moles de néopentane et de 1,6 à 0,2 % en moles de E-1,1,1,4,4,4-hexafluoro-2-butène, qui présente de préférence un point d'ébullition de 8,3 °C à 9,3 °C à une pression de 1 atm (1,013 bar) et qui est plus préférentiellement une composition de type azéotrope.

6. Composition selon la revendication 2, dans laquelle la composition comprend de 38,4 à 62,6 % en moles de néopentane et de 65,2 à 37,4 % en moles de E-1,1,1,4,4,4-hexafluoro-2-butène, qui présente de préférence un point d'ébullition de 0,9 °C à 1,2 °C à une pression de 1 atm (1,013 bar) et qui est plus préférentiellement une composition de type azéotrope.

7. Composition selon la revendication 2, dans laquelle la composition comprend de 0,2 à 2,8 % en moles de néopentane et de 99,8 à 97,2 % en moles de E-1,1,1,4,4,4-hexafluoro-2-butène, qui présente de préférence un point d'ébullition de 6,3 °C à 7,4 °C à une pression de 1 atm (1,013 bar) et qui est plus préférentiellement une composition de type azéotrope.

8. Composition selon la revendication 2, dans laquelle la composition comprend :
de 99,8 à 98,2 % en moles de néopentane et de 0,2 à 1,8 % en moles de E-1,1,1,4,4,4-hexafluoro-2-butène ; ou
de 71,6 à 47,6 % en moles de néopentane et de 28,4 à 52,4 % en moles de E-1,1,1,4,4,4-hexafluoro-2-butène ; ou
de 1,2 à 0,2 % en moles de néopentane et de 98,8 à 99,8 % en moles de E-1,1,1,4,4,4-hexafluoro-2-butène ; ou
de 99,8 à 98,4 % en moles de néopentane et de 0,2 à 1,6 % en moles de E-1,1,1,4,4,4-hexafluoro-2-butène ; ou
de 66,6 à 40,8 % en moles de néopentane et de 33,4 à 59,2 % en moles de E-1,1,1,4,4,4-hexafluoro-2-butène ; ou
de 1,8 à 0,2 % en moles de néopentane et de 98,2 à 99,8 % en moles de E-1,1,1,4,4,4-hexafluoro-2-butène ; ou
de 62,8 à 35,2 % en moles de néopentane et de 37,2 à 64,8 % en moles de E-1,1,1,4,4,4-hexafluoro-2-butène ; ou
de 2,6 à 0,2 % en moles de néopentane et de 97,4 à 99,8 % en moles de E-1,1,1,4,4,4-hexafluoro-2-butène ; ou
de 59,8 à 30,2 % en moles de néopentane et de 40,2 à 69,8 % en moles de E-1,1,1,4,4,4-hexafluoro-2-butène ; ou
de 3,4 à 0,2 % en moles de néopentane et de 96,6 à 99,8 % en moles de E-1,1,1,4,4,4-hexafluoro-2-butène ; ou
de 58,4 à 28,2 % en moles de néopentane et de 41,6 à 71,8 % en moles de E-1,1,1,4,4,4-hexafluoro-2-butène ; ou
de 3,8 à 0,2 % en moles de néopentane et de 96,2 à 99,8 % en moles de E-1,1,1,4,4,4-hexafluoro-2-butène ; ou
de 57,2 à 26,4 % en moles de néopentane et de 42,8 à 73,6 % en moles de E-1,1,1,4,4,4-hexafluoro-2-butène ; ou
de 4,4 à 0,2 % en moles de néopentane et de 95,6 à 99,8 % en moles de E-1,1,1,4,4,4-hexafluoro-2-butène ; ou
de 55,4 à 23,6 % en moles de néopentane et de 44,6 à 76,4 % en moles de E-1,1,1,4,4,4-hexafluoro-2-butène ; ou
de 5,2 à 99,1 % en moles de néopentane et de 94,8 à 0,9 % en moles de E-1,1,1,4,4,4-hexafluoro-2-butène ; ou
de 99,8 à 98,6 % en moles de néopentane et de 0,2 à 1,4 % en moles de E-1,1,1,4,4,4-hexafluoro-2-butène ; ou
de 53,8 à 23,2 % en moles de néopentane et de 46,2 à 76,8 % en moles de E-1,1,1,4,4,4-hexafluoro-2-butène ; ou
de 5,4 à 0,2 % en moles de néopentane et de 94,6 à 99,8 % en moles de E-1,1,1,4,4,4-hexafluoro-2-butène ; ou
de 56 à 24,4 % en moles de néopentane et de 44,0 à 75,6 % en moles de E-1,1,1,4,4,4-hexafluoro-2-butène ; ou
de 4,6 à 0,2 % en moles de néopentane et de 95,4 à 99,8 % en moles de E-1,1,1,4,4,4-hexafluoro-2-butène ; ou
de 57,2 à 3,8 % en moles de néopentane et de 42,8 à 96,2 % en moles de E-1,1,1,4,4,4-hexafluoro-2-butène ; ou
de 2,6 à 0,2 % en moles de néopentane et de 97,4 à 99,8 % en moles de E-1,1,1,4,4,4-hexafluoro-2-butène, qui présente de préférence un point d'ébullition de - 20 °C à 120 °C à une pression de 1 atm (1,013 bar) et qui est plus préférentiellement une composition de type azéotrope.

9. Composition selon la revendication 1, dans laquelle la composition comprend du néopentane et du Z-1,1,1,4,4,4-hexafluoro-2-butène, dans lequel le Z-1,1,1,4,4,4-hexafluoro-2-butène est présent dans la composition en une quantité efficace pour former une composition azéotrope ou une composition de type azéotrope avec le néopentane.

10. Composition selon la revendication 9, dans laquelle la composition comprend de 60 à 93 % en moles de néopentane et de 40 à 7 % en moles de Z-1,1,1,4,4,4-hexafluoro-2-butène, qui présente de préférence un point d'ébullition de -40 °C à 120 °C à une pression de 1,5 psi à 310 psi (0,103 bar à 21,374 bar) et qui est plus préférentiellement une composition azéotrope.

11. Composition selon la revendication 9, dans laquelle la composition comprend de 56 à 83 % en moles de néopentane et de 44 à 17 % en moles de Z-1,1,1,4,4,4-hexafluoro-2-butène, qui présente de préférence un point d'ébullition de 5 °C à 145 °C à une pression de 1 atm à 30 atm (1,013 bar à 30,398 bar) et qui est plus préférentiellement une composition azéotrope.

12. Composition selon la revendication 9, dans laquelle la composition comprend de 99,6 à 79,2 % en moles de néopentane et de 0,4 à 20,8 % en moles de Z-1,1,1,4,4,4-hexafluoro-2-butène, qui présente de préférence un point d'ébullition de 7,8 °C à 9,4 °C à une pression de 1 atm (1,013 bar) et qui est plus préférentiellement une composition de type azéotrope.

13. Composition selon la revendication 9, dans laquelle la composition comprend de 3,2 à 1,6 % en moles de néopentane et de 96,8 à 98,4 % en moles de Z-1,1,1,4,4,4-hexafluoro-2-butène, qui présente de préférence un point d'ébullition de 32,6 °C à 33,0 °C à une pression de 1 atm (1,013 bar) et qui est plus préférentiellement une composition de type azéotrope.

14. Composition selon la revendication 9, dans laquelle la composition comprend :
de 99,8 à 85,2 % en moles de néopentane et de 0,2 à 14,8 % en moles de Z-1,1,1,4,4,4-hexafluoro-2-butène ; ou
de 99,8 à 80,8 % en moles de néopentane et de 0,2 à 19,2 % en moles de Z-1,1,1,4,4,4-hexafluoro-2-butène ; ou
de 99,8 à 76,2 % en moles de néopentane et de 0,2 à 23,8 % en moles de Z-1,1,1,4,4,4-hexafluoro-2-butène ; ou
de 99,8 à 61,8 % en moles de néopentane et de 0,2 à 38,2 % en moles de Z-1,1,1,4,4,4-hexafluoro-2-butène ; ou
de 0,4 à 0,2 % en moles de néopentane et de 99,6 à 99,8 % en moles de Z-1,1,1,4,4,4-hexafluoro-2-butène ; ou
de 99,8 à 69,8 % en moles de néopentane et de 0,2 à 30,2 % en moles de Z-1,1,1,4,4,4-hexafluoro-2-butène ; ou
de 99,8 à 67,6 % en moles de néopentane et de 0,2 à 32,4 % en moles de Z-1,1,1,4,4,4-hexafluoro-2-butène ; ou
de 99,8 à 95,0 % en moles de néopentane et de 0,2 à 5 % en moles de Z-1,1,1,4,4,4-hexafluoro-2-butène ; ou de 86,4 à 63,6 % en moles de néopentane et de 13,6 à 36,4 % en moles de Z-1,1,1,4,4,4-hexafluoro-2-butène ; ou
de 0,4 à 0,2 % en moles de néopentane et de 99,6 à 99,8 % en moles de Z-1,1,1,4,4,4-hexafluoro-2-butène ; ou
de 99,8 à 96,6 % en moles de néopentane et de 0,2 à 3,4 % en moles de Z-1,1,1,4,4,4-hexafluoro-2-butène ; ou
de 80,6 à 59,6 % en moles de néopentane et de 19,4 à 40,4 % en moles de Z-1,1,1,4,4,4-hexafluoro-2-butène ; ou
de 99,8 à 97,6 % en moles de néopentane et de 0,2 à 2,4 % en moles de Z-1,1,1,4,4,4-hexafluoro-2-butène ; ou
de 74,2 à 56,0 % en moles de néopentane et de 25,8 à 44,0 % en moles de Z-1,1,1,4,4,4-hexafluoro-2-butène ; ou
de 0,2 à 0,8 % en moles de néopentane et de 99,2 à 99,8 % en moles de Z-1,1,1,4,4,4-hexafluoro-2-butène ; ou
de 99,8 à 98,2 % en moles de néopentane et de 0,2 à 1,8 % en moles de Z-1,1,1,4,4,4-hexafluoro-2-butène ; ou
de 76,6 à 50,0 % en moles de néopentane et de 23,4 à 50,0 % en moles de Z-1,1,1,4,4,4-hexafluoro-2-butène ; ou
de 1,0 à 0,2 % en moles de néopentane et de 99,0 à 99,8 % en moles de Z-1,1,1,4,4,4-hexafluoro-2-butène.

15. Composition selon la revendication 14, qui présente un point d'ébullition de -20 °C à 120 °C à une pression de 1 atm (1,013 bar) et qui est de préférence une composition de type azéotrope.
